# EUROPEAN PATENT APPLICATION

(11) **EP 1 263 229 A1**
(43) Date of publication of application: **04.12.2002**
(21) Application number: 01901546.0
(22) Date of filing: 25.01.2001
(51) Int. Cl.: H04N 7/16, H04N 7/08, G06F 17/60

(54) **DATA PROCESSING DEVICE, DATA PROCESSING SYSTEM, DATA PROCESSING METHOD, AND STORAGE MEDIUM**

(30) Priority: 31.01.2000 JP 2000022010; 18.05.2000 JP 2000146937
(71) Applicant: CANON KABUSHIKI KAISHA, Ohta-ku Tokyo 146-8501 (JP)
(72) Inventor: TAGASHIRA, Nobuhiro, Yokohama-shi, Kanagawa 222-0026 (JP); IWAMURA, Keiichi, Mariinuyoshinocho 405, Yokohama-shi, Kanagawa 232-0026 (JP); ANDO, Tsutomu, Zama-shi, Kanagawa 228-0024 (JP)
(74) Representative: Beresford, Keith Denis Lewis
(86) International application number: JP0100479
(87) International publication number: WO01058157

(57) **Abstract**

A data processing apparatus for reproducing a plurality of object streams having predetermined information severally, which apparatus is provided with an IPMP information extraction circuit (54) for extracting hierarchical management information for controlling the permission and inhibition of the usage of each object from input data, a usage status check circuit (56) for judging whether the usage of an upper level object of a subjected object is prohibited or not in accordance with the IPMP information extracted by the IPMP information extraction circuit (54), and a control information extraction circuit (58) for controlling the data processing apparatus to prohibit the usage of the subjected object if the usage of the upper level object of the subjected object is prohibited in accordance with a judgment result by the usage status check circuit (56).

## Description

### TECHNICAL FIELD

The present invention relates to a data processing apparatus, a data processing system, a data processing method, and a storage medium, all being for controlling the usage of a plurality of object data according to the structural configuration of a scene to protect intellectual property in case of the reproduction of information from the object data.

### BACKGROUND ART

Recently, Moving Picture Experts Group Phase 4 (MPEG-4) has been being standardized by International Standards Organization (ISO) as a method for encoding data such as a moving image, a sound and the like to treat the respective encoded data as object data and transmitting the so-called multimedia data combined to be a single bit stream. A reception apparatus (or a reproduction apparatus) in accordance with MPG-4, for example, can reproduce a sound and a moving image scene by associating them with each other. Because a MPEG-4 system has a feature of treating data as object data, it is easy to reorganize a received bit stream by separating it to each object datum one by one. Incidentally, as for an object datum having a copyright, it is necessary to limit the use of the object datum for the protection of the copyright.

In case of a datum stream in accordance with MPEG-4, many video scenes and video object data can be transmitted and received separately on a single stream unlike conventional ordinary multimedia streams. As for a sound, similarly, many object data can be transmitted and received separately on a single stream.

As the information for creating a certain scene formed by synthesizing these object data, there exists Binary Format For Scene (BIFS) being modified Virtual Reality Modeling Language (VRML). BIFS describes a scene in binary. A scene is synthesized in accordance with BIFS. Because individual object data necessary for the synthesization of a scene are transmitted after being optimally encoded severally, the transmitted object data are decoded severally on a decoding side also. Then, a reproduction apparatus synchronizes time axes of the individual object data with a time axis in the reproduction apparatus in accordance with the descriptions of the object data on BIFS to synthesize and output the object data.

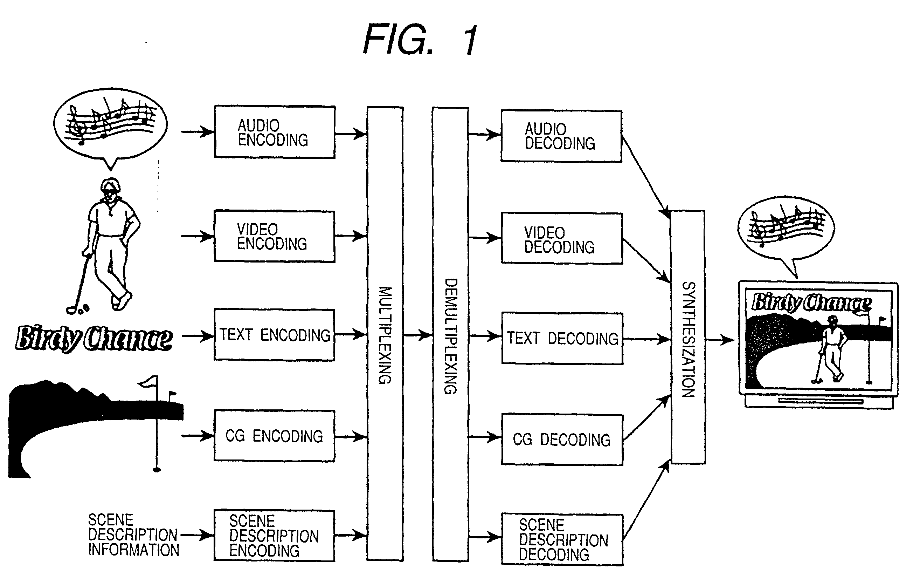

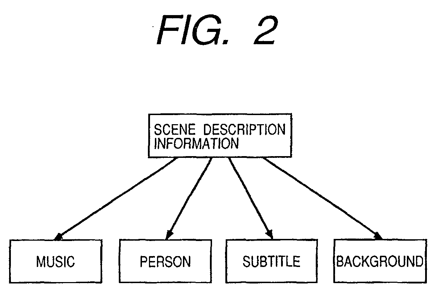

Moreover, a scene can be structured so as to have a hierarchy. An example thereof is shown in Fig. 1 as a typical drawing. A case where there are a plurality of object data such as music, a person, a subtitle, and a background is supposed. An encoder in accordance with MPEG-4 encodes each object datum separately, and multiplexes each of the encoded object data to generate a MPEG-4 stream. A decoder demultiplexes the MPEG-4 stream to each object datum, and decodes them separately to synthesize the results of the decoding, and outputs the synthesization result. Fig. 2 shows the hierarchical structure of the object data shown in Fig. 1.

Because an MPEG-4 reproduction apparatus synthesizes a plurality of object data as described above, if any object datum has intellectual property (e.g. a copyright), it is necessary to limit the use thereof. According to the need, MPEG-4 employs an intellectual property management and protection system called as Intellectual Property Management And Protection (IPMP). By means of the IPMP system, it is possible to control the use of individual object data.

A conventional IPMP system makes it possible to control the use of each object datum separately by coupling each object datum with the IPMP information thereof, in order to make the degree of freedom large. However, it is practically desired to enhance the efficiency of the usage control of object data by employing control of the usage of the object data per a plurality of object data in place of the separate usage control of each object datum.

Although the usage of object data can be controlled on a scene basis in MPEG-4, the more the number of object data included in a scene increases, the more the degree of troublesomeness for the control of the usage of the object data increases. Therefore, the effective usage control of object data is desired.

In MPEG-4, a scene can be described hierarchically as described above. In this case also, the more the number of scenes increases, the greater the degree of the troublesomeness for the separate control of the usage of object data at every object datum increases. From this point of view, also, the effective usage control of object data is desired.

Against the background described above, an object of the present invention is to provide a data processing apparatus, a data processing system, a data processing method, and a storage medium, all being capable of performing the protection control for objects constituting a scene effectively on an object basis.

### DISCLOSURE OF INVENTION

A data processing method according to the present invention is a data processing method of reproducing a plurality of object streams having predetermined information severally, which comprises: a management information extraction step of extracting hierarchical management information for controlling permission and inhibition of usage of each object from input data; an upper level judgment step of judging whether usage of an upper level object of a subjected object is prohibited or not in accordance with the management information extracted in the management information extraction step; and a control step of prohibiting usage of the subjected object if the usage of the upper level object of the subjected object is prohibited in accordance with a judgment result in the upper level judgment step.

Moreover, it is preferable that the object streams are bit streams conforming to MPEG-4.

Moreover, it is preferable that the management information is information included in an Intellectual Property Management And Protection (IPMP) stream.

Moreover, it is preferable that the management information is encrypted information.

Moreover, it is preferable that the management information of a predetermined hierarchical level is encrypted information.

Moreover, it is preferable that the management information is managed in relation to each of the object streams.

Moreover, it is preferable that the management information is hierarchized by including therein information of a pointer to other management information.

Moreover, it is preferable that the management information is hierarchized by including other management information therein.

Moreover, it is preferable that the management information is management information of a scene description information (or BIFS) stream.

Moreover, it is preferable that the method updates a usage control method of the object streams every time when a scene is updated by the scene description information stream.

Moreover, a data processing apparatus according to the present invention is a data processing apparatus for reproducing a plurality of object streams having predetermined information severally, which comprises: management information extraction means for extracting hierarchical management information for controlling permission and inhibition of usage of each object from input data; upper level judgment means for judging whether usage of an upper level object of an subjected object is prohibited or not in accordance with the management information extracted by the management information extraction means; and control means for prohibiting usage of the subjected object if the usage of the upper level object of the subjected object is prohibited in accordance with a judgment result by the upper level judgment means.

Moreover, it is preferable that the object streams are bit streams conforming to MPEG-4.

Moreover, it is preferable that the management information is information included in an Intellectual Property Management And Protection (IPMP) stream.

Moreover, it is preferable that the management information is encrypted information.

Moreover, it is preferable that the management information of a predetermined hierarchical level is encrypted information.

Moreover, it is preferable that the management information is managed in relation to each of the object streams.

Moreover, it is preferable that the management information is hierarchized by including therein information of a pointer to other management information.

Moreover, it is preferable that the management information is hierarchized by including other management information therein.

Moreover, it is preferable that the management information is management information of a scene description information (or BIFS) stream.

Moreover, it is preferable that the apparatus updates a usage control method of the object streams at every time when a scene is updated by the scene description information stream.

Moreover, the data processing apparatus according to the present invention includes: first encryption means for encrypting scene description information by means of a primary cryptograph key; generation means for generating a secondary cryptograph key by making use of the primary cryptograph key; second encryption means for encrypting a medium stream by making use of the secondary cryptograph key; superposition means for superposing a bit stream indicating an encryption method of the first encryption means on bit streams resulted in by encryption of the first and the second encryption means to generate a bit stream; and transmission means for transmitting the bit stream generated by the superposition means to external equipment.

Moreover, it is preferable that the generation means further generates the secondary cryptograph key by making use of the scene description information.

Moreover, it is preferable that the bit stream is a bit stream conforming to MPEG-4.

Moreover, it is preferable that the scene description information is Binary Format For Scene (BIFS) information conforming to MPEG-4.

Moreover, a data processing apparatus according to the present invention includes: reception means for receiving a bit stream transmitted from external equipment; detection means for detecting a primary cryptograph key; first decryption means for decrypting encrypted scene description information included in the received bit stream on a basis of a decryption method included in the received bit stream by making use of the primary cryptograph key detected by the detection means; generation means for generating a secondary cryptograph key by making use of the primary cryptograph key; second decryption means for decrypting an encrypted medium stream included in the bit stream by making use of the secondary cryptograph key; and reproduction means for reproducing the medium stream decrypted by the second decryption means, on a basis of the scene description information decrypted by the first decryption means.

Moreover, it is preferable that the detection means detects the primary cryptograph key from a storage medium storing the primary cryptograph key.

Moreover, it is preferable that the generation means further generates the secondary cryptograph key by making use of the scene description information.

Moreover, it is preferable that the bit stream is a bit stream conforming to MPEG-4.

Moreover, it is preferable that the scene description information is Binary Format For Scene (BIFS) information conforming to MPEG-4.

Moreover, a data processing system according the present invention is a data processing system comprising a datum transmission apparatus and a datum reception apparatus, the datum transmission apparatus including: first encryption means for encrypting scene description information by means of a primary cryptograph key; generation means for generating a secondary cryptograph key by making use of the primary cryptograph key; second encryption means for encrypting a medium stream by making use of the secondary cryptograph key; superposition means for superposing a bit stream indicating an encryption method of the first encryption means on bit streams resulted in by encryption of the first and the second encryption means to generate a bit stream; and transmission means for transmitting the bit stream generated by the superposition means to an authentication apparatus, and the datum reproduction apparatus including: reception means for receiving the bit stream transmitted from the transmission apparatus; detection means for detecting the primary cryptograph key; first decryption means for decrypting the encrypted scene description information included in the received bit stream on a basis of the decryption method included in the received bit stream by making use of the primary cryptograph key detected by the detection means; generation means for generating the secondary cryptograph key by making use of the primary cryptograph key; second decryption means for decrypting the encrypted medium stream included in the bit stream by making use of the secondary cryptograph key; and reproduction means for reproducing the medium stream decrypted by the second decryption means, on a basis of the scene description information decrypted by the first decryption means.

Moreover, data processing method according to the present invention includes: a first encryption step of encrypting scene description information by means of a primary cryptograph key; a generation step of generating a secondary cryptograph key by making use of the primary cryptograph key; a second encryption step of encrypting a medium stream by making use of the secondary cryptograph key; a superposition step of superposing a bit stream indicating an encryption method in the first encryption step on bit streams resulted in by encryption in the first and the second encryption steps to generate a bit stream; and a transmission step for transmitting the bit stream generated in the superposition step to external equipment.

Moreover, it is preferable that at the generation step generates the secondary cryptograph key by making use of the scene description information.

Moreover, it is preferable that the bit stream is a bit stream conforming to MPEG-4.

Moreover, it is preferable that the scene description information is Binary Format For Scene (BIFS) information conforming to MPEG-4.

Moreover, a data processing method according to the present invention includes: a reception step of receiving a bit stream transmitted from external equipment; a detection step of detecting a primary cryptograph key; a first decryption step of decrypting encrypted scene description information included in the received bit stream on a basis of a decryption method included in the received bit stream by making use of the primary cryptograph key detected in the detection step; a generation step of generating a secondary cryptograph key by making use of the primary cryptograph key; a second decryption step of decrypting an encrypted medium stream included in the bit stream by making use of the secondary cryptograph key; and a reproduction step of reproducing the medium stream decrypted at the second decryption step, on a basis of the scene description information decrypted in the first decryption step.

Moreover, it is preferable that the detection step detects the primary cryptograph key from a storage medium storing the primary cryptograph key.

Moreover, it is preferable that the generation step generates the secondary cryptograph key by making use of the scene description information.

Moreover, it is preferable that the bit stream is a bit stream conforming to MPEG-4.

Moreover, it is preferable that the scene description information is Binary Format For Scene (BIFS) information conforming to MPEG-4.

Moreover, a data processing method according to the present invention is a data processing method of a data processing system comprising a datum transmission apparatus and a datum reception apparatus, wherein a data processing method of the datum transmission apparatus includes: a first encryption step of encrypting scene description information by means of a primary cryptograph key; a generation step of generating a secondary cryptograph key by making use of the primary cryptograph key; a second encryption step of encrypting a medium stream by making use of the secondary cryptograph key; a superposition step of superposing a bit stream indicating an encryption method in the first encryption step on bit streams resulted in by encryption in the first and the second encryption steps to generate a bit stream; and a transmission step of transmitting the bit stream generated in the superposition step to an authentication apparatus, and a method of processing data of the datum reproduction apparatus includes: a reception step of receiving the bit stream transmitted from the transmission apparatus; a detection step of detecting the primary cryptograph key; a first decryption step of decrypting the encrypted scene description information included in the received bit stream on a basis of the decryption method included in the received bit stream by making use of the primary cryptograph key detected in the detection step; a generation step of generating the secondary cryptograph key by making use of the primary cryptograph key; a second decryption step of decrypting the encrypted medium stream included in the bit stream by making use of the secondary cryptograph key; and a reproduction step of reproducing the medium stream decrypted in the second decryption step, on a basis of the scene description information decrypted in the first decryption step.

Moreover, a storage medium according to the present invention stores program software for executing the aforesaid methods of processing data.

### BRIEF DESCRIPTION OF THE DRAWINGS

Fig. 1 is a drawing showing a schematic configuration of a MPEG-4 encoding system;
Fig. 2 is a typical drawing showing a configuration of object data in the MPEG-4 encoding system;
Fig. 3 is a block diagram showing the schematic configuration of a data processing apparatus of a first embodiment according to the present invention;
Fig. 4 is a drawing for illustrating the decode processing of object data under the control of an IPMP stream;
Fig. 5 is a typical drawing of a configuration example of a scene;
Fig. 6 is a typical drawing of a configuration example of IPMP information;
Fig. 7 is a flowchart showing the processing operation of an IPMP stream in the first embodiment;
Fig. 8 is a typical drawing showing the configuration of the object data of a scene #1;
Fig. 9 is a typical drawing showing the configuration of the object data of a scene #2;
Fig. 10 is a typical drawing showing the configuration of the IPMP information corresponding to the scene #1 of Fig. 8;
Fig. 11 is a typical drawing showing the configuration of the IPMP information corresponding to the scene #2 of Fig. 9;
Fig. 12 is a drawing showing a configuration example of an IPMP stream corresponding to the IPMP configurations shown in Figs. 10 and 11;
Fig. 13 is a drawing showing another configuration example of an IPMP stream corresponding to the IPMP configurations shown in Figs. 10 and 11;
Fig. 14 is a block diagram showing a detailed configuration of the data processing apparatus of the first embodiment according to the present invention;
Fig. 15 is a block diagram showing another detailed configuration of the data processing apparatus of the first embodiment according to the present invention;
Fig. 16 is a typical drawing of a configuration example of scenes;
Fig. 17 is a typical drawing showing a configuration example of the IPMP information corresponding to the configuration of Fig. 16;
Fig. 18 is a drawing showing a configuration example of an IPMP stream corresponding to the configuration of Fig. 17;
Fig. 19 is a drawing showing another configuration example of an IPMP stream corresponding to the configuration of Fig. 17;
Fig. 20 is a drawing showing a configuration example of an IPMP stream corresponding to encryption;
Fig. 21 is a drawing showing another configuration example of an IPMP stream corresponding to encryption;
Fig. 22 is a flowchart showing the processing operation of an IPMP stream corresponding to the configuration examples of Figs. 20 and 21 in a second embodiment;
Fig. 23 is a block diagram showing the configuration of a data processing apparatus of the second embodiment according to the present invention;
Fig. 24 is a block diagram showing the internal configuration of a datum transmission apparatus of a third embodiment according to the present invention;
Fig. 25 is a block diagram showing the processing operation of each component of the datum transmission apparatus of Fig. 24 functionally;
Fig. 26 is a flowchart showing the data processing of the datum transmission apparatus of Fig. 24;
Fig. 27 is a drawing for illustrating a bit stream of the third embodiment;
Fig. 28 is a block diagram showing the internal configuration of a datum reproduction apparatus of the third embodiment according to the present invention;
Fig. 29 is a drawing showing tree information of a scene;
Fig. 30 is a block diagram showing the processing operation of each component of the datum reproduction apparatus of Fig. 28 functionally;
Fig. 31 is a flowchart showing the data processing of the datum reproduction apparatus of Fig. 28;
Fig. 32 is a block diagram of a datum reproduction apparatus of a fourth embodiment according to the present invention;
Fig. 33 is a drawing showing an example of a scene;
Fig. 34 is a drawing showing the tree information of a protected scene and the tree information of an unprotected scene;
Fig. 35 is a drawing showing a result of rendering of the scenes of Fig. 34; and
Fig. 36 is a drawing showing the structure of a bit stream of a mixed scene.

### DESCRIPTION OF THE PREFERRED EMBODIMENTS

### EMBODIMENT 1

Hereinafter, the attached drawings are referred while a first embodiment of the present invention is described in detail.

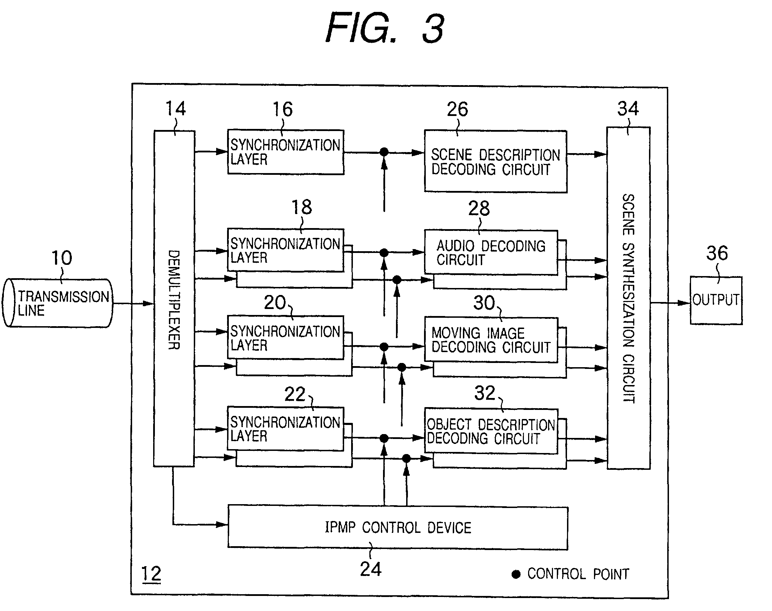

Fig. 3 is a block diagram showing the schematic configuration of a data processing apparatus of the first embodiment according to the present invention.

In Fig. 3, a transmission line 10 is composed of, for example, various networks, computer buses and the like. An MPEG-4 stream is input into a demultiplexer 14 of a reproduction apparatus 12 through the transmission line 10. Incidentally, the transmission line 10 may include an interface with a reproduction mechanism or a reproduction apparatus of a storage medium such as a compact disk read-only memory (CD-ROM), a digital versatile disk read-only memory (DVD-ROM) and a DVD random access memory (DVD-RAM).

The demultiplexer 14 separates the MPEG-4 stream input through the transmission line 10 to scene description data, moving image object data, audio object data, object description data and control data (or Intellectual Property Management And Protection (IPMP) information that will be described later), and supplies the scene description data, the moving image object data, the audio object data and the object description data to respectively corresponding synchronization layers 16, 18, 20 and 22, and further supplies the control data (or the IPMP information) to an IPMP control unit 24.

The MPEG-4 stream includes the information necessary for controlling the reproduction of individual object data constituting a scene such as sound, a moving image and the like to protect their intellectual property (e.g. a copyright). Namely, the information includes the IPMP information. The IPMP information is added to an IPMP stream, and the IPMP stream is added to the MPEG-4 stream to be transmitted in the similar way to the other objects.

The audio object data are encoded by a high efficiency coding such as a well-known Code Excited Line Prediction (CELP) coding, a Twin Transform Domain Weighted Interleave Vector Quantization (VQ) coding or the like. The moving image object data are encoded by a high efficiency coding such as a well-known MPEG-2 system or an H-263 system. The scene description data include graphic data.

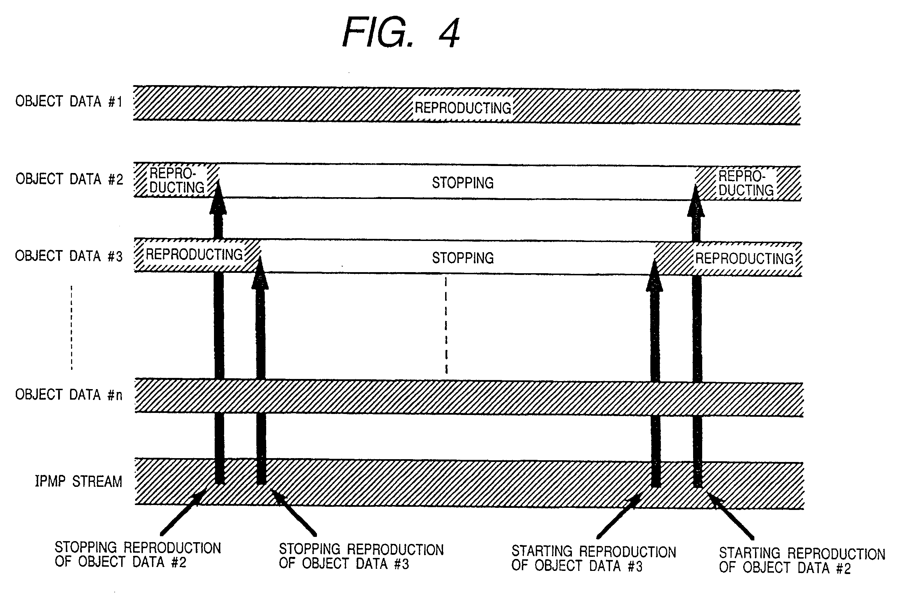

Each of the synchronization layers 16, 18, 20 and 22 synchronizes the scene description data, the audio object data, the moving image object data and the object description data in time in accordance with the time information called as a time stamp, which is added to the MPEG-4 stream, and supplies them to decoding circuits 26, 28, 30 and 32. The IPMP control unit 24 controls data supply from the synchronization layers 16, 18, 20 and 22 to the decoding circuits 26, 28, 30 and 32 and execution (a start and a stop) of decoding operations of the decoding circuits 26, 28, 30 and 32. The IPMP control circuit 24 controls the usage of each of the object data separately such as a stop of the reproduction of object data #2, a stop of the reproduction of object data #3, a start of the reproduction of object data #3, and a start of the reproduction of object data #2, as shown in Fig. 4, though the details of the control will be described later.

Incidentally, the present embodiment is provided with severally plural synchronization layers 18, 20 and 22, and severally plural decoding circuits 28, 30 and 32 in order to make it possible to decode the audio object data, the moving image object data and the object description data even if there are severally plural object data of them that are mutually different in the MPEG-4 stream.

The scene description data, the audio object data, the moving image object data and the object description data, all being decoded by the decoding circuits 26, 28, 30 and 32, respectively, are applied to a scene synthesization circuit 34. The scene synthesization circuit 34 synthesizes the audio object data, the moving image object data and the object description data, all being decoded by the decoding circuits 28, 30 and 32 on the basis of the scene description data decoded by the scene description decoding circuit 26, and performs the graphics processing of the synthesized data. A final data row obtained in such the way is supplied to output equipment 36 such as a display and a printer apparatus to be visualized.

As described above, the MPEG-4 stream is composed of the scene description data, the moving image object data, the audio object data, the object description data, the IPMP stream and the like. The demultiplexer 14 separates each of the object data. The IPMP stream separated by the demultiplexer is stored in a memory in the IPMP control unit 24. After that, the IPMP stream is read out from the memory, and control information is extracted from the IPMP information. The operations of the reproduction systems of respective object data (such as a start of reproduction, a stop of reproduction, and the like) are controlled in accordance with the extracted control information.

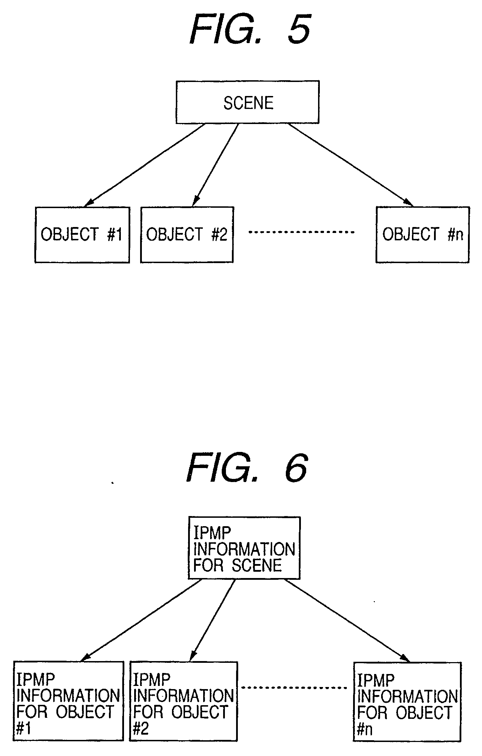

The IPMP information can be classified into IPMP information to scene description data (hereinafter referred to as "IPMP information for a scene") and IPMP information to object data except the IPMP information for scene (hereinafter referred to as "IPMP information for an object"). Moreover, a scene is composed of one or more object data, and it can be considered that the scene has a hierarchical structure like one shown in Fig. 5, as described above. Because the object data have severally a hierarchical structure, the IPMP information coupled to the object data can be made to have a similar hierarchical structure as shown in Fig. 6.

In the present embodiment, IPMP information is made so as to have a hierarchical structure to be hierarchized according to the structural configuration of object data. Then, the usage control of the object data according to their structural configuration is realized by the use of the hierarchized IPMP information.

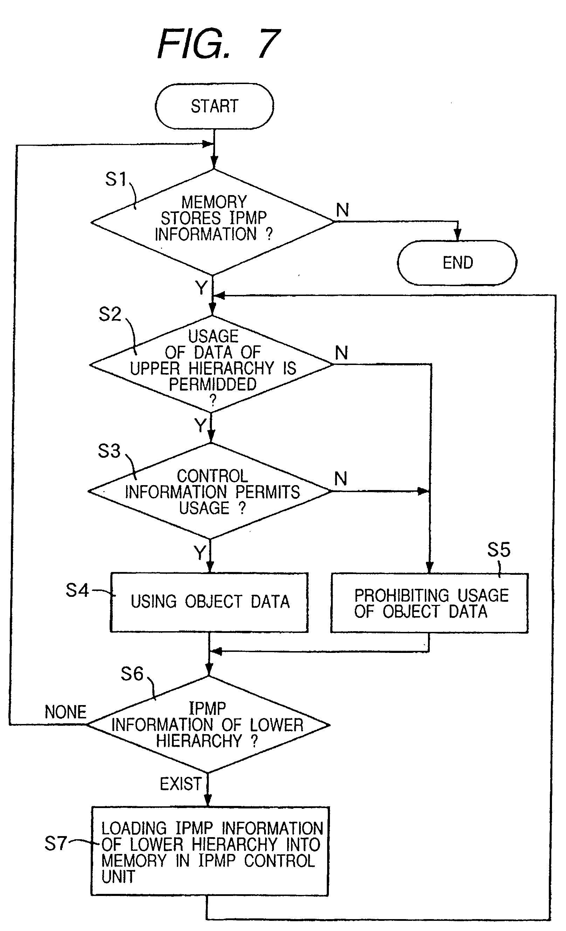

Fig. 7 is referred while the operation of the IPMP control unit 24 of the present embodiment is described.

Fig. 7 shows an operation flowchart of the IPMP control unit 24 in case of receiving an MPEG-4 stream including an IPMP stream.

At first, at step S1, the IPMP stream is stored in a memory in the IPMP control unit 24, and whether IPMP information is included in the stored IPMP stream or not is checked.

If the IPMP stream is not included in the memory, the operation of the IPMP control unit 24 is ended. For example, in case of a MPEG-4 stream not including any IPMP stream, the IPMP control unit 24 ends the IPMP processing. Thereby, the object data can be used freely.

If it becomes clear that there is IPMP information at the step S1, the operation advances to a step S2.

At the step S2, the usage status of object data at an upper hierarchical level, which is indicated by the IPMP information, is checked. If the usage of the data at the upper hierarchical level is permitted, the operation advances to a step S3. If the usage of the data is not permitted, the operation advances to a step S5.

At the step S3, whether the IPMP information includes the control information concerning the usage control of the object data or not is checked.

If it becomes clear that the usage is permitted at the step S3, the operation advances to a step S4, and if not, the operation advances to a step S5.

At the step S4, the object data corresponding to the IPMP information is used.

At the step S5, the usage of the object data corresponding to the IPMP information is prohibited.

At a step S6, whether the IPMP information includes IPMP information at a lower hierarchical level or not is checked. If it is ascertained that the IPMP information at the lower hierarchical level is not included at the step S6, the operational steps starting from the step S1 are repeated. If the IPMP information at the lower hierarchical level is included in the IPMP information, the IPMP information at the lower hierarchical level is loaded into the memory in the IPMP control unit 24, and the operational steps starting from the step S2 are repeated. That is, the permission and inhibition of the usage of an object located at a lower level by one step is judged on the basis of the control information of IPMP information, and the usage thereof is controlled according to the judgement result.

The procedure described above is repeated for every scene, and thereby the usage of an object can be controlled according to the structural configuration of the object data concerning the object.

Next, the usage control of an object according to the structural configuration of a scene in the present embodiment is described. It is supposed that an MPEG-4 stream is composed of continuous scenes #1 and #2,

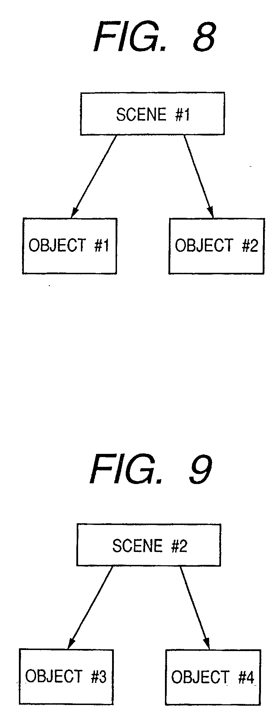

Fig. 8 shows a typical drawing of the structural configuration of the scene #1, and Fig. 9 shows the structural configuration of the scene #2.

It is supposed that the scene #1 is composed of object data #1 and #2 and the scene #2 is composed of object data #3 and #4.

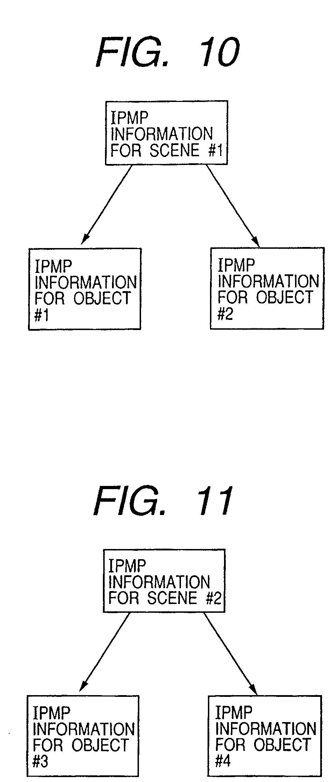

Fig. 10 shows a typical drawing of the structural configuration of the IPMP information corresponding to the scene #1, and Fig. 11 shows a typical drawing of the structural configuration of the IPMP information corresponding to the scene #2.

The IPMP information for the scene #1 is composed of the IPMP information for the object #1 and the IPMP information for the object #2, and the IPMP information for the scene #2 is composed of the IPMP information for the object #3 and the IPMP information for the object #4.

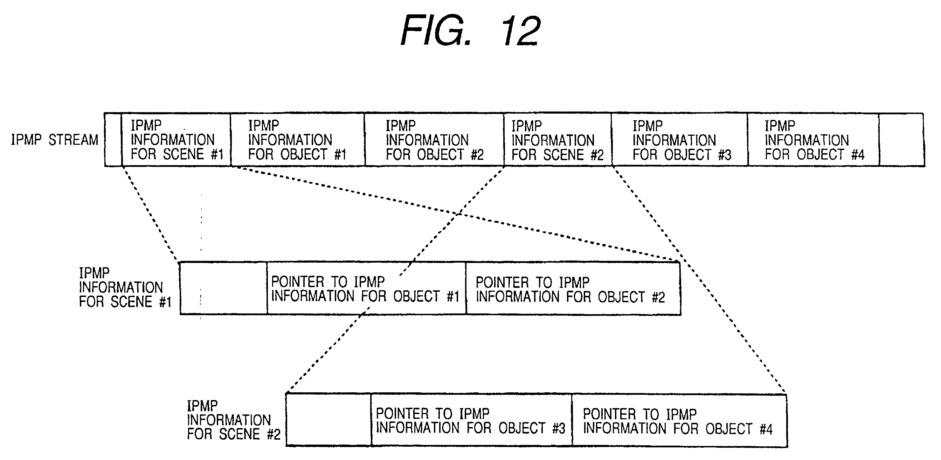

Fig. 12 shows an example of the configuration of an IPMP stream. The IPMP stream is composed of the IPMP information for the scene #1, the IPMP information for the object #1, the IPMP information for the object #2, the IPMP information for the scene #2, the IPMP information for the object #3 and the IPMP information for the object #4. The IPMP information for the scene #1 is equipped with a pointer to the IPMP information for the object #1 and a pointer to the IPMP information for the object #2. The IPMP information for the scene #2 is equipped with a pointer to the IPMP information for the object #3 and a pointer to the IPMP information for the object #4. The IPMP information is hierarchized by the use of these pointers.

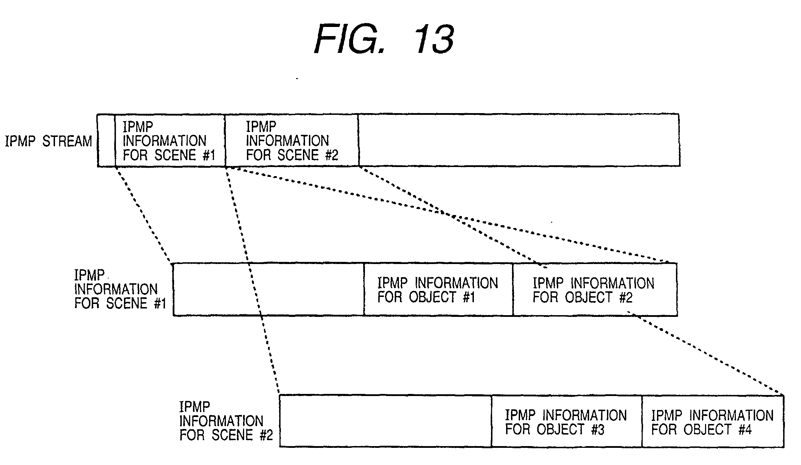

Fig. 13 shows another example of the configuration of the IPMP stream. In this example, the IPMP stream is composed of the IPMP information for the scene #1 and the IPMP information for the scene #2. The IPMP information for the scene #1 includes the IPMP information for the object #1 and the IPMP information for the object #2. The IPMP information for the scene #2 includes the IPMP information for the object #3 and the IPMP information for the object #4. This configuration can also be employed for the hierarchization of the IPMP information.

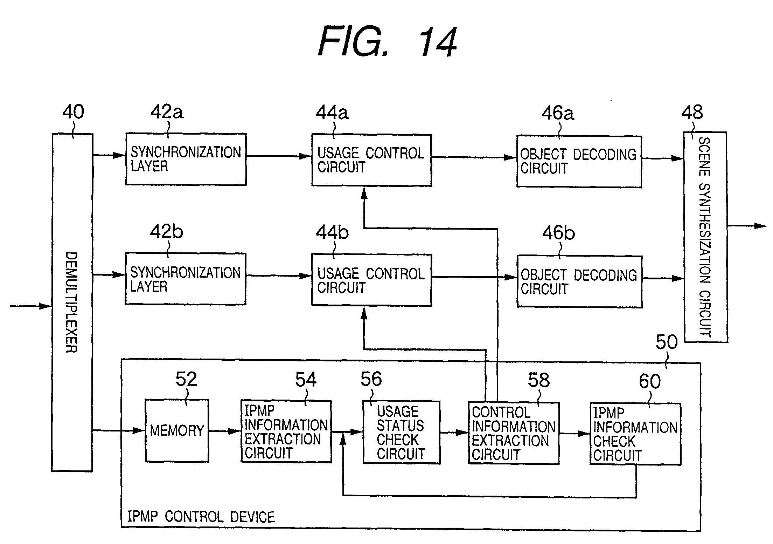

Fig. 14 shows a block diagram of the configuration of the data processing apparatus. In Fig. 14, the unit of an IPMP control unit is shown in detail.

In Fig. 14, a reference numeral 40 denotes a demultiplexer. Reference numerals 42a and 42b denote a synchronization layer, severally. Reference numerals 44a and 44b denote a usage control circuit, severally. Reference numerals 46a and 46b denote an object decoding circuit, severally. A reference numeral 48 denotes a scene synthesization circuit. A reference numeral 50 denotes the IPMP control unit.

The IPMP control unit 50 is equipped with a memory 52 for storing an IPMP stream, an IPMP information extraction circuit 54 for extracting IPMP information from the memory 52, a usage status check circuit 56, a control information extraction circuit 58 and an IPMP information check circuit 60. Incidentally, two systems are exemplified as object decoding systems in Fig. 14. However, the number of the systems is not limited to the two. Needles to say, three systems or more may be provided.

Each component in Fig. 14 is described concretely.

The demultiplexer 40 separates input MPEG-4 stream to scene description data, moving image data, audio object data, object description data, an IPMP stream and the like. The demultiplexer 40 supplies the scene description data, the moving image object data, the audio object data and the object description data to the synchronization layers 42a and 42b, and supplies the IPMP stream to the IPMP control unit 50.

The synchronization layers 42a and 42b synchronize each object data on a time axis on the basis of a time stump.

The usage control circuits 44a and 44b selectively supply the outputs of the synchronization layers 42a and 42b to the decoding circuits 46a and 46b, respectively, in accordance with control information from the control information extraction circuit 58 in the IPMP control unit 50. Thereby, the usage of each object is controlled.

The object decoding circuits 46a and 46b decode input data, i.e. encoded object data, to apply the decoded object data to the scene synthesization circuit 48.

The scene synthesization circuit 48 synthesizes the outputs of the decoding circuits 46a and 46b on the basis of the decoded scene description data to execute the graphics processing of them.

The memory 52 temporarily stores the IPMP steam from the demultiplexer 40.

The IPMP information extraction circuit 54 extracts IPMP information from the IPMP stream stored in the memory 52. If no IPMP information can be extracted from a IPMP stream stored in the memory 52, the IPMP control unit 50 stops its usage control processing.

The usage status check circuit 56 checks the usage status of object data at an upper hierarchical level from the IPMP information. If the object data can be used, the usage status check circuit 56 outputs the IPMP information to the control information extraction circuit 58. If the object data cannot be used, the IPMP control unit 50 prohibits the usage of the object data corresponding to the IPMP information.

The control information extraction circuit 58 extracts control information from the IPMP information, and applies the extracted control information to the usage control circuits 44a and 44b.

The IPMP information check circuit 60 checks whether the IPMP information includes IPMP information at a lower hierarchical level or not. If the IPMP information includes the IPMP information at the lower hierarchical level, the IPMP information check circuit 60 outputs the IPMP information at the lower hierarchical level to the control information extraction circuit 58.

In comparison with the flowchart of Fig. 7, a description is given to the data processing of the object data #1 to #4 as the operation of the IPMP control unit 50 in the concrete case where the IPMP information for the scene #1 and the IPMP information for the scene #2 in the IPMP stream shown in Fig. 12 are permitted.

The IPMP information extraction circuit 54 extracts the IPMP information for the scene #1 from an IPMP stream in the memory 52, and outputs the extracted IPMP information to the usage status check circuit 56 (step S1).

Because there are no object data at the upper hierarchical level of the IPMP information for the scene #1, the usage status check circuit 56 outputs the IPMP information for the scene #1 to the control information extraction circuit 58 (step S2).

The control information extraction circuit 58 extracts control information from the IPMP information for the scene #1. By controlling the usage control circuits 44a and 44b on the basis of the extracted control information, the control information extraction circuit 58 controls the usage of the corresponding object data (steps S3, S4 and S5). If it is permitted to use the object data, the usage control circuits 44a and 44b supply the data from the synchronization layers 42a and 42b to the object decoding circuits 46a and 46b, respectively (step S4). If it is inhibited to use the object data, the usage control circuits 44a and 44b do not supply the data from the synchronization layers 42a and 42b to the object decoding circuits 46a and 46b (step S5).

The IPMP information check circuit 60 detects the IPMP information for the object #1 as IPMP information at a lower hierarchical level, and outputs the detected IPMP information to the usage status check circuit 56 (steps S6 and S7).

Because the usage of the object data corresponding to the scene #1, which are at the upper hierarchical level to the object data #1, is permitted, the usage status check circuit 56 outputs the IPMP information for the object #1 to the control information extraction circuit 58 (step S2). The control information extraction circuit 58 extracts control information from the IPMP information for the object #1. The control information extraction circuit 58 controls the usage control circuits 44a and 44b on the basis of the extracted control information, and thereby controls the usage of the corresponding object data #1 (steps S3 to S5).

The IPMP information check circuit 60 detects the IPMP information for the object #2 as IPMP information at a lower hierarchical level, and outputs the detected IPMP information to the usage status check circuit 56 (steps S6 and S7).

Because the usage of the object data corresponding to the scene #1, which is at the upper hierarchical level to the object data #2, is permitted, the usage status check circuit 56 outputs the IPMP information for the object #2 to the control information extraction circuit 58 (step S2). The control information extraction circuit 58 extracts control information from the IPMP information for the object #2. The control information extraction circuit 58 controls the usage control circuits 44a and 44b on the basis of the extracted control information, and thereby controls the usage of the corresponding object data #2 (steps S3 to S5).

Because the IPMP information check circuit 60 does not detect the next IPMP information, the processing of the system is shifted to the IPMP information extraction circuit 54 (step S6).

The IPMP information extraction circuit 54 extracts the next IPMP information, i.e. the IPMP information for the scene #2 being the next scene, from the memory 52, and outputs the extracted IPMP information to the usage status check circuit 56 (step S1). Because there are no object data at the upper hierarchical level of the IPMP information for the scene #2, the usage status check circuit 56 outputs the IPMP information for the scene #2 to the control information extraction circuit 58 (step S2). The control information extraction circuit 58 extracts control information from the IPMP information for the scene #2. By controlling the usage control circuits 44a and 44b on the basis of the extracted control information, the control information extraction circuit 58 controls the usage of the corresponding object data (steps S3, S4 and S5).

The IPMP information check circuit 60 detects the IPMP information for the object #3 as IPMP information at a lower hierarchical level, and outputs the detected IPMP information to the usage status check circuit 56 (steps S6 and S7).

Because the usage of the object data corresponding to the scene #2, which are at an upper hierarchical level to the object data #3, is permitted, the usage control check circuit 56 outputs the IPMP information for the object #3 to the control information extraction circuit 58 (step S2). The control information extraction circuit 58 extracts control information from the IPMP information for the object #3. The control information extraction circuit 58 controls the usage control circuits 44a and 44b on the basis of the extracted control information, and thereby controls the usage of the corresponding object data #3 (steps S3 to S5).

The IPMP information check circuit 60 detects the IPMP information for the object #4 as IPMP information at a lower hierarchical level, and outputs the detected IPMP information to the usage status check circuit 56 (steps S6 and S7).

Because the usage of the object data corresponding to the scene #1, which is at an upper hierarchical level to the object data #4, is permitted, the usage status check circuit 56 outputs the IPMP information for the object #4 to the control information extraction circuit 58 (step S2). The control information extraction circuit 58 extracts control information from the IPMP information for the object #4. The control information extraction circuit 58 controls the usage control circuits 44a and 44b on the basis of the extracted control information, and thereby controls the usage of the corresponding object data #4 (steps S3 to S5).

Because the IPMP information check circuit 60 does not detect the next IPMP information, the processing of the usage control is ended (steps S6 and S1).

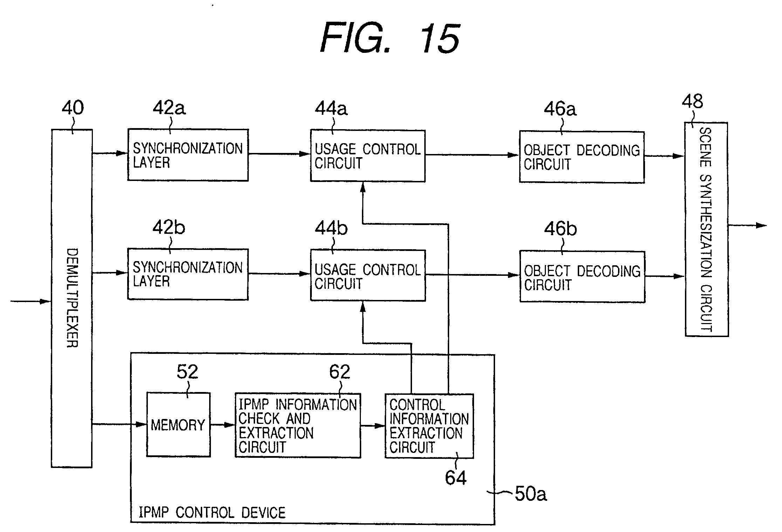

Incidentally, in Fig. 14, the configuration of the IPMP control unit 50 is shown as a configuration easy to understand in comparison with the flowchart of Fig. 7. If data are processed in parallel in each block when the data are fed back in such a way as shown in Fig. 14, the problem of collision of data and the problem of synchronization are produced. Accordingly, it is necessary to process the data sequentially on a block basis. On the contrary, the feedback of data can be removed by examining the usage status of object data at upper hierarchical levels at the time of the extraction of IPMP information to check hierarchical information even when the object data can be used. Such a modified configuration example is shown in Fig. 15. Incidentally, in Fig. 15, the same components as those shown in Fig. 14 are denoted by the same reference marks as those in Fig. 14.

In a data processing apparatus shown in Fig. 15, an IPMP information check and extraction circuit 62 examines the usage status of object data at upper hierarchical levels. If the object data can be used, the IPMP information check and extraction circuit 62 outputs IPMP information to a control information extraction circuit 64 in sequence while checking the structural configuration of the IPMP information. The control information extraction circuit 64 controls the usage control circuits 44a and 44b in accordance with the control information extracted from the input IPMP information in the similar way to the control information extraction circuit 58.

By the control of the usage of object data at lower hierarchical levels after the examination of the usage status of object data at upper hierarchical levels, the usage control of the object data can be performed for every hierarchical level. That is, the usage of object data is not only controlled in accordance with control information included in IPMP information, but can also be controlled according to the usage status of the object data at upper hierarchical levels. Even if object data at a lower hierarchical level is not controlled to be used, the usage of this object data can be prohibited when the usage of object data at an upper hierarchical level is prohibited.

This feature is very effective in case of "pasting object data to object data", which is one of the features of MPEG-4. A case where the object data to be pasted can be used and the usage of the object data in which the former object data are pasted is prohibited is considerable. If the usage control only by the use of IPMP information is performed, some contradictions are produce in the configuration of scenes in such a case, and there is the possibility that the MPEG-4 system is downed when things come to the worst. However, the present embodiment can deal with such a case suitably by generating IPMP information with the consideration of the usage form of the object data to control the object data on the basis of the generated IPMP information. To put it concretely, the problem can be settled by setting the object data in which object data to be pasted are pasted, at an upper hierarchical level and by setting the latter object data at a lower hierarchical level. In this case, the latter object data to be passed can be used only when the former object data can be used.

Now, another example of the hierarchical configuration of data is described.

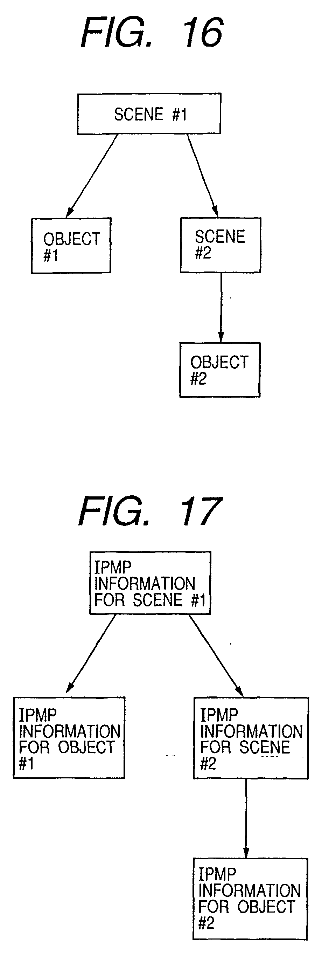

As mentioned above, in MPEG-4, a hierarchical scene configuration can be realized. Fig. 16 shows a hierarchical structural configuration of scenes.

In the example shown in Fig. 16, a scene #1 is composed of an object data #1 and an scene #2. The scene #2 is composed of an object data #2. Fig. 17 shows a configuration example of IPMP information corresponding to the scene configuration shown in Fig. 16. IPMP information for the scene #1 is composed of IPMP information for an object #1 and IPMP information for the scene #2. The IPMP information for the scene #2 is composed of IPMP information for an object #2.

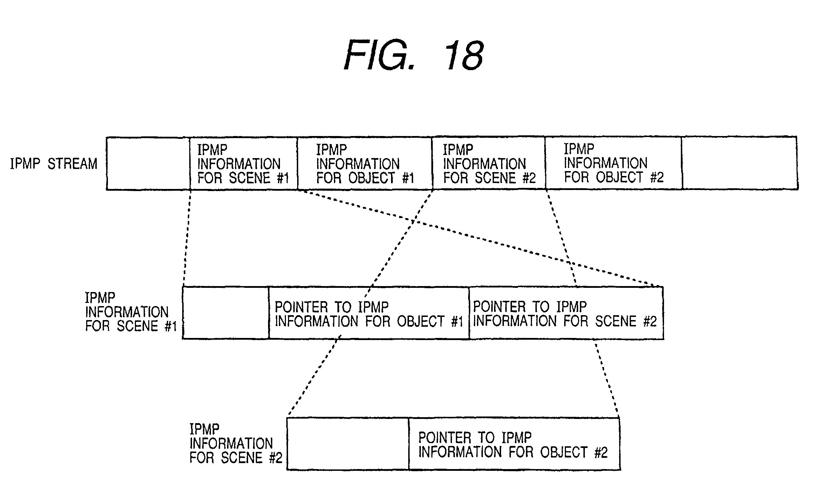

Fig. 18 shows a configuration example of an IPMP stream corresponding to the configuration example of the IPMP information shown in Fig. 17. In this example, the IPMP stream is composed of the IPMP information for the scene #1, the IPMP information for the object #1, the IPMP information for the scene #2, and the IPMP information for the object #2. The IPMP information for the scene #1 includes a pointer to the IPMP information for the object #1, and a pointer to the IPMP information for the scene #2. The IPMP information for the scene #2 includes a pointer to the IPMP information for the object #2. Thereby, the IPMP information can be hierarchized.

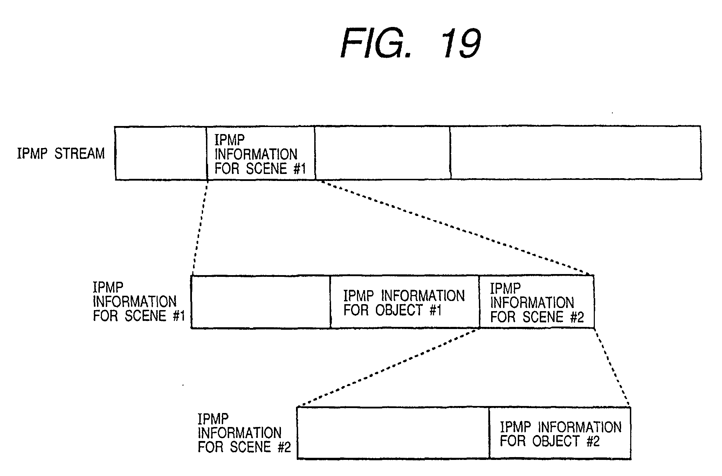

Fig. 19 shows another configuration example of an IPMP stream. This example does not use pointers. The IPMP stream is composed of IPMP information for a scene #1. The IPMP information for the scene #1 includes IPMP information for an object #1 and IPMP information for a scene #2. The IPMP information for the scene #2 includes IPMP information for an object #2. IPMP information can be hierarchized also in such a configuration. In this configuration, IPMP information for a scene and IPMP information for an object are treated similarly.

The configuration shown in Fig. 14 can control the use of each object in the hierarchical structures shown in Figs. 16 and 17 in the same processing procedure as that shown in Fig. 7. A description is given to the operation of the usage control of each of the objects in the hierarchical structures shown in Figs. 16 and 17 by reference to the components shown in Fig. 14 and each step of Fig. 7. Incidentally, in the description here, it is supposed that the IPMP information for the scene #1 and the IPMP information for the scene #2 are permitted.

The demultiplexer 40 separates IPMP stream included in an MPEG-4 stream, and outputs the separated IPMP stream to the IPMP control unit 50. The memory 52 stores the IPMP stream from the demultiplexer 40 temporarily.

The IPMP information extraction circuit 54 extracts the IPMP information for the scene #1 from the IPMP stream in the memory 52, and outputs the extracted IPMP information to the usage status check circuit 56 (step S1) Because there are no object data at the upper hierarchical level of the IPMP information for the scene #1, the usage status check circuit 56 outputs the IPMP information for the scene #1 to the control information extraction circuit 58 (step S2).

The control information extraction circuit 58 extracts control information from the IPMP information for the scene #1. By controlling the usage control circuits 44a and 44b on the basis of the extracted control information, the control information extraction circuit 58 controls the usage of the corresponding object data (steps S3, S4 and S5).

The IPMP information check circuit 60 detects the IPMP information for the object #1 as IPMP information at a lower hierarchical level, and outputs the detected IPMP information to the usage status check circuit 56 (steps S6 and S7).

Because the usage of the object data corresponding to the scene #1. which is located at the upper hierarchical level to the object data #1, is permitted, the usage control check circuit 56 outputs the IPMP information for the object #1 to the control information extraction circuit 58 (step S2). The control information extraction circuit 58 extracts control information from the IPMP information for the object #1. The control information extraction circuit 58 controls the usage control circuits 44a and 44b on the basis of the extracted control information, and thereby controls the usage of the corresponding object data #1 (steps S3 to S5).

The IPMP information check circuit 60 detects the IPMP information for the scene #2 as IPMP information at a lower hierarchical level, and outputs the detected IPMP information to the usage status check circuit 56 (steps S6 and S7). Because the usage of the object data corresponding to the scene #1, which is located at the upper hierarchical level to the scene #2, is permitted, the usage status check circuit 56 outputs the IPMP information for the scene #2 to the control information extraction circuit 58 (step S2). The control information extraction circuit 58 extracts control information from the IPMP information for the scene #2. The control information extraction circuit 58 controls the usage control circuits 44a and 44b on the basis of the extracted control information, and thereby controls the usage of the corresponding object data (steps S3 to S5).

The IPMP information check circuit 60 detects the IPMP information for the object #2 as the IPMP information at a lower hierarchical level, and outputs the detected IPMP information to the usage status check circuit 56 (steps S6 and S7).

Because the usage of the object data corresponding to the scene #2, which is located at the upper hierarchical level of the object data #2, is permitted, the usage status check circuit 56 outputs the IPMP information for the object #2 to the control information extraction circuit 58 (step S2). The control information extraction circuit 58 extracts control information from the IPMP information for the object #2. By controlling the usage control circuits 44a and 44b on the basis of the extracted control information, the control information extraction circuit 58 controls the usage of the corresponding object data #2 (steps S3, S4 and S5).

Because the IPMP information check circuit 60 does not detect the next IPMP information, the processing is transferred to the IPMP information extraction circuit 54 (step S6).

The processing described above is the processing to a certain scene. At every update of a sub-scene configuration such as the scene #2, the usage control is updated in a similar way to that described above.

As described above, the present embodiment can control the usage of object data even if the object data have a hierarchical scene configuration.

Though the usage control of object data for a scene is the same as that of the object data in the hierarchical structure shown in Figs. 5 and 6, the usage of object data of each scene in a hierarchized scene structure can be controlled similarly by the recursive processing for every scene.

### EMBODIMENT 2

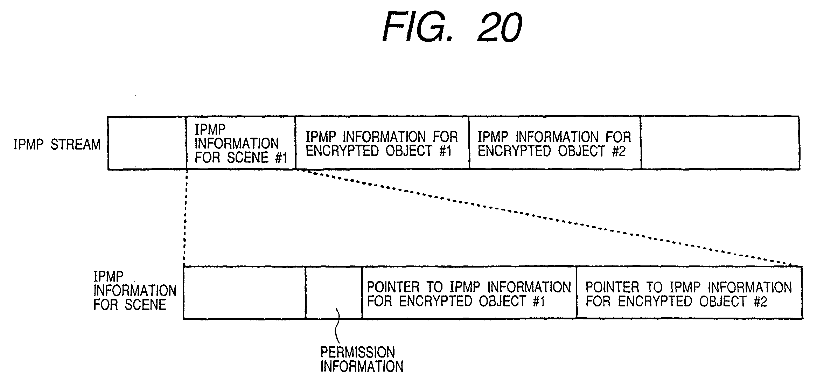

Next, a configuration example to an IPMP stream capable of controlling access to IPMP information. Fig. 20 shows a first configuration example of an IPMP stream provided with an access control function. The configuration example shown in Fig. 20 corresponds to the scene configuration shown in Fig. 8 and the IPMP hierarchical configuration shown in Fig. 10.

In Fig. 20, the IPMP stream is composed of IPMP information for the scene #1, encrypted IPMP information for the object #1, and encrypted IPMP information for the object #2. The IPMP information for the scene #1 is composed of permission information for generating key information for solving encryption, a pointer to encrypted IPMP information for the object #1 and a pointer for encrypted IPMP information for the object #2. The combination of the IPMP information- and a cipher system makes the access control to the IPMP information for the object #1 and the IPMP information for the object #2 possible.

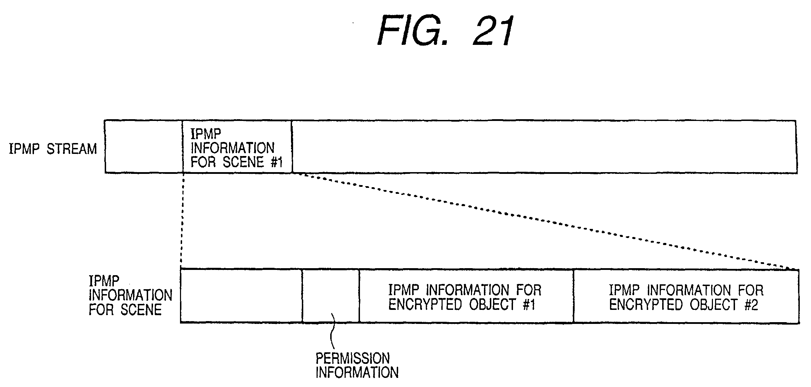

Fig. 21 shows a second configuration example of an IPMP stream provided with an access control function.

In Fig. 21, the IPMP stream is composed of IPMP information for the scene #1. The IPMP information for the scene #1 is composed of permission information, encrypted IPMP information for the object #1 arid encrypted IPMP information for the object #2. If the permission information is provided with a decryptin key for the encrypted IPMP information for the object #1 and the encrypted IPMP information for the object #2, the encrypted IPMP information for the object #1 and the encrypted IPMP information for the object #2 can be decrypted.

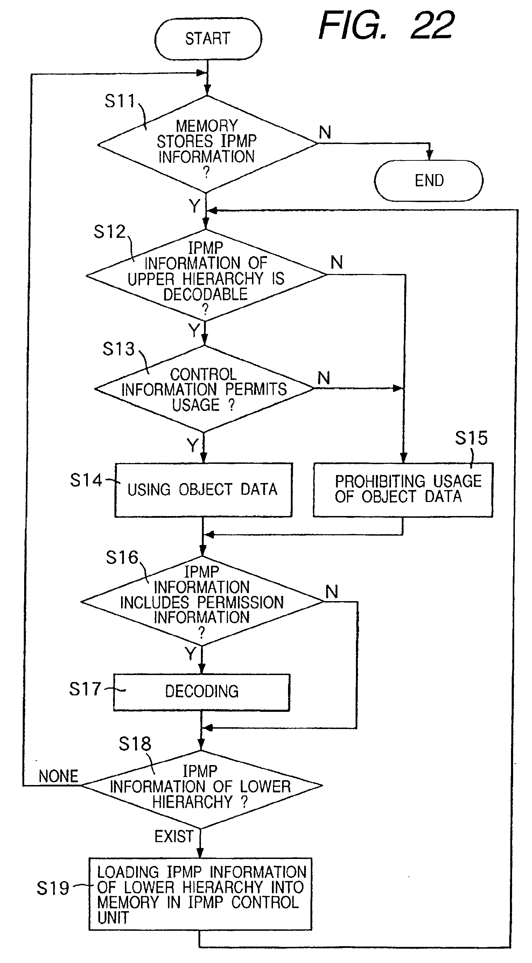

Fig. 22 is a flowchart showing the processing of the IPMP streams with the access control functions shown in Figs. 20 and 21.

At first, at step S11, an IPMP stream separated from an MPEG-4 stream is stored in a memory in an IPMP control unit, and whether IPMP information is included in the stored IPMP stream or not is judged.

If it is decided clear that the IPMP stream is not included at the step S11, the processing of the IPMP control is ended. That is, this case corresponds to the case of a MPEG-4 stream not including any IPMP stream, or the like. In this case, all the object data can freely be used.

On the other hand, if it is decided that there is IPMP information at the step S11, the operation advances to a step S12. At the step S12, whether IPMP information of an upper hierarchical level is encrypted or not is checked, and whether the decode key is included in the IPMP information or not is checked when the IPMP information is encrypted. If the IPMP information is not encrypted or the decode key is included in the IPMP information, the operation advances to a step S13. In the other cases, the operation advances to a step S15.

At the step S13, whether the usage of the object data of the IPMP information is permitted by the control information of the IPMP information or not is checked. If the usage is permitted, the operation advances to a step S14, and if not, the operation advances to the step S15.

At the step S14, the object data corresponding to the IPMP information is used.

At the step S15. the usage of the object data corresponding to the IPMP information is prohibited.

At a step S16, whether the IPMP information includes permission information or not is checked. If it is ascertained that the permission information is included, the operation advances to a step S17. If it is ascertained that the permission information is not included, the operation advances to a step S18.

At the step S17, the encrypted information is decoded by means of the key information obtained from the permission information.

At the step S18, whether the IPMP information or a decoded result includes IPMP information of a lower hierarchical level or not is checked. If it is decided that the IPMP information is included, the operation advances to a step S19. If it is decided that the IPMP information is not included, the operation returns to the step S11.

At the step S19, the IPMP information of the lower hierarchical level is stored in the memory in the IPMP control unit, and then the operation returns to the step S12.

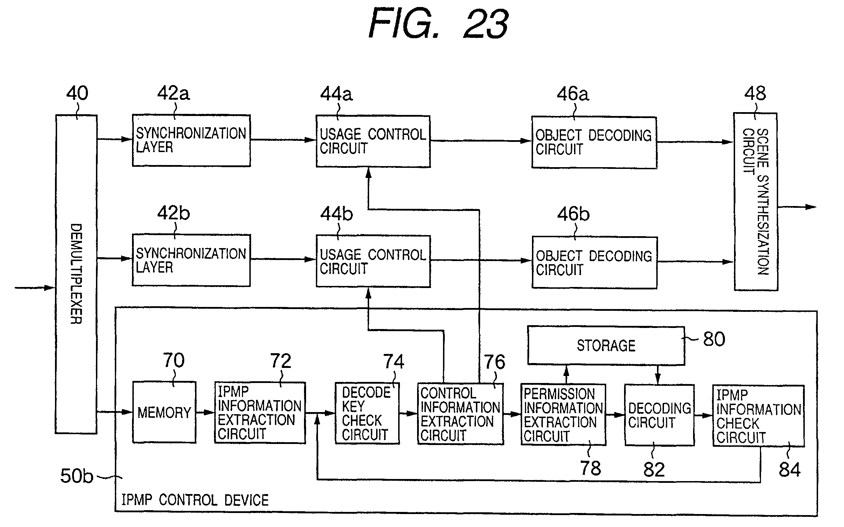

Fig. 23 shows a block diagram of the configuration of the data processing apparatus implementing the operation shown in Fig. 22. Incidentally, in Fig. 23, the same components as those shown in Fig. 14 are denoted by the same reference marks as those in Fig. 14.

The operation of an IPMP control unit 50b is chiefly described. A memory 70 temporarily stores an IPMP steam from the demultiplexer 40. An IPMP information extraction circuit 72 extracts IPMP information from the IPMP stream stored in the memory 70. If no IPMP information can be extracted from the IPMP stream stored in the memory 70, the IPMP control unit 50b stops its usage control processing.

A decode key check circuit 74 checks whether IPMP information of an upper hierarchical level is encrypted or not and whether a key information for decoding is included or not if the IPMP information is encrypted on the basis of an output from the IPMP information extraction circuit 72. If the IPMP information is not encrypted, and if the IPMP information can be decoded even if the IPMP information is encrypted because the IPMP information stores the key information, the decode key check circuit 74 outputs the IPMP information. In the other cases, the processing is transferred to the IPMP information extraction circuit 72.

The control information extraction circuit 76 extracts control information from the IPMP information, and applies the extracted control information to the usage control circuits 44a and 44b.

A permission information extraction circuit 78 extracts permission information included in IPMP information, and writes the extracted permission information into a storage circuit 80. A decoding circuit 82 decodes control information of the IPMP information on the basis of key information obtained from the permission information stored in the storage circuit 80.

The IPMP information check circuit 84 checks whether the IPMP information includes IPMP information of a lower hierarchical level or not. If the IPMP information includes the IPMP information of the lower hierarchical level, the IPMP information check circuit 84 outputs the IPMP information of the lower hierarchical level to the decode key check circuit 74. If the IPMP information does not include the IPMP information of the lower hierarchical level, the processing is transferred to the IPMP information extraction circuit 72.

Next, comparing with the flowchart of Fig. 22, the operation of the apparatus shown in Fig. 23 is concretely described on the basis of the hierarchical structure of the IPMP information shown in Fig. 20 as an example.

The IPMP information extraction circuit 72 extracts the IPMP information for the scene #1 from an IPMP stream stored in the memory 70, and outputs the extracted IPMP information to the decode key check circuit 74 (step S11). Because there are no object data of an upper hierarchical level of the IPMP information for the scene #1, the decode key check circuit 74 outputs the IPMP information for the scene #1 (step S12). The control information extraction circuit 76 extracts control information from the IPMP information for the scene #1, and controls the usage of the corresponding object data on the basis of the extracted control information (steps S13, S14 and S15).

The permission information extraction circuit 78 extracts the permission information from the IPMP information for the scene #1, and outputs the extracted permission information to the storage circuit 80 (step S16). The decoding circuit 82 decodes the encrypted IPMP information for the object #1 and the encrypted IPMP information for the object #2 by the use of the key information obtained from the permission information stored in the storage circuit 80 (step S17).

The IPMP information check circuit 84 detects the IPMP information for the object #1 and the IPMP information for the object #2 as IPMP information of a lower hierarchical level, and outputs the detected IPMP information to the decode key check circuit 74 (steps S18 and S19).

Because the IPMP information for the scene #1, which are of the upper hierarchical level, is not encrypted, the decode key check circuit 74 outputs the IPMP information for the object #1 (step S12). The control information extraction circuit 76 extracts control information-from the IPMP information for the object #1, and controls the usage of the corresponding object data #1 on the basis of the extracted control information (steps S13 to S15).

The permission information extraction circuit 78 does not extract the permission information from the IPMP information for the object #1 (step S16). The IPMP information check circuit 84 does not detect the IPMP information of the lower hierarchical level from the IPMP information for the object #1 (step S18).

Next, the IPMP information extraction circuit 72 extracts the IPMP information for the object #2, and outputs the extracted IPMP information for the object #2 to the decode key check circuit 74 (step S11). Because the IPMP information for the scene #1, which is of the upper hierarchical level, is not encrypted, the decode key check circuit 74 outputs the IPMP information for the object #2 (step S12). The control information extraction circuit 76 extracts control information from the IPMP information for the object #2. The control information extraction circuit 76 controls the usage of the corresponding object data #2 on the basis of the extracted control information (steps S13 to S15).

The permission information extraction circuit 78 does not extract the permission information from the IPMP information for the object #2 (step S16). The IPMP information check circuit 84 does not detect the IPMP information of the lower hierarchical level from the IPMP information for the object #2 (step S18). Here, the IPMP control processing is ended (step S11).

Incidentally, Fig. 23 shows each component arranged correspondingly to the flowchart of Fig. 22. If data are processed in parallel in each block when the data are fed back in such a way as shown in Fig. 23, the problem of collision of data and the problem of synchronization are produced. Accordingly, it is necessary to process the data sequentially on a block basis. On the contrary, in a similar way to the configuration of Fig. 15 to Fig. 14, the feedback of data can be removed by checking whether IPMP information of an upper hierarchical levels can be decoded or not at the time of the extraction of IPMP information, to sequentially output the IPMP information while checking the hierarchical structure of the IPMP information when the IPMP information of the upper hierarchical level can be decoded.

In Fig. 22, processing of a certain scene is shown. At every update of the scene configuration, it is necessary to execute the processing shown in Fig. 22.

By executing the access control to IPMP information of a lower hierarchical level in accordance with a cipher method, the usage of each of object data can be controlled more surely. A cipher method is used as a symbolic convention of a hierarchical structure, and an IPMP stream is composed of encrypted IPMP information, and further IPMP information to object data of a lower hierarchical level is decoded at every usage control of a scene. Consequently, illegal access to IPMP information can be prevented.

The embodiment described above proposes the encryption of IPMP information. Because the encryption of object data themselves is realized by the IPMP system of MPEG-4, the encryption of the object data can be used jointly with the encryption of IPMP information of the present embodiment. Thereby, not only the illegal access to IPMP information can be prevented, but also the illegal access to object data themselves can be prevented. Consequently, the usage of the object data of a lower hierarchical level can be controlled surely according to the usage status of an upper hierarchical level.

That is, the embodiment makes the IPMP information of a lower hierarchical level capable of being decoded by permitting the use of object data of an upper hierarchical level by means of the decoding of encrypted IPMP information and the decoding of encrypted object data. Furthermore, the use of encrypted object data of a lower hierarchical level becomes possible owing to the IPMP information.

It is obvious that similar operations and advantages can be obtained if the encryption of IPMP information is also used to the hierarchical structure shown in Figs. 16 and 17.

The present invention cannot only be applied to a two-dimensional image object, but also can be applied to a three-dimensional image object. Further more, the scope of the present invention includes a case where a plurality of object data correspond to one logical object, like the formation of a three-dimensional image object by the use of texture image data, modeling data and animation data, as well as a case where one object datum corresponds to one logical object. The three-dimensional object formation is performed by, for example, a home use game machine, a personal computer, a graphic computer or the like.

Although IPMP information being management information and layering information are input as object streams, the scope of the present invention also includes, for example, the case where the IPMP information and the layering information are input by an external input unit such as a keyboard or from an external storage unit such as a magnetic storage. Although management information is managed together with layering information, the management information and the layering information may be managed separately. That is, each of object data, management information and layering data are treated in a similar way to the object data, IPMP information and layering information, the latter two being management information. Thereby, in accordance with the usage status of object data, it becomes possible to control the usage of other object data.

### EMBODIMENT 3

A datum transmission apparatus according to the present embodiment encrypts Binary Format Scene (BIFS), which is scene description information describing the configuration of each medium for images (static images), video (moving images) and audio, with a primary cryptograph key. Moreover, the datum transmission apparatus encrypts the bit stream of each of the aforesaid media (medium stream) with a secondary cryptograph key generated on the basis of the primary cryptograph key and a check sum of BIFS. And the datum transmission apparatus transmits a bit stream to a datum reproduction apparatus, which bit stream is formed by the superposition of the encrypted bit stream of BIFS (BIFS bit stream), the encrypted bit stream of each medium (medium bit stream) and an Intellectual Property Management And Production (IPMP) stream (a decryption method of BIFS and a generation method of secondary cryptograph key). The datum reproduction apparatus will be described later.

Moreover, the datum reproduction apparatus of the present embodiment loads an integrated circuit (IC) card on which the information of the primary cryptograph key is described into the aforesaid datum reproduction apparatus. Thereby, the datum reproduction apparatus decodes encrypted BIFS by the use of the primary cryptograph key. And the datum reproduction apparatus generates the secondary cryptograph key in accordance with the method described in the aforesaid IPMP stream. Thereby, the datum reproduction apparatus decodes the encrypted bit stream of each of the aforesaid media, and reproduces them.

Hereinafter, the aforesaid datum transmission apparatus and the datum reproduction apparatus are described in detail.

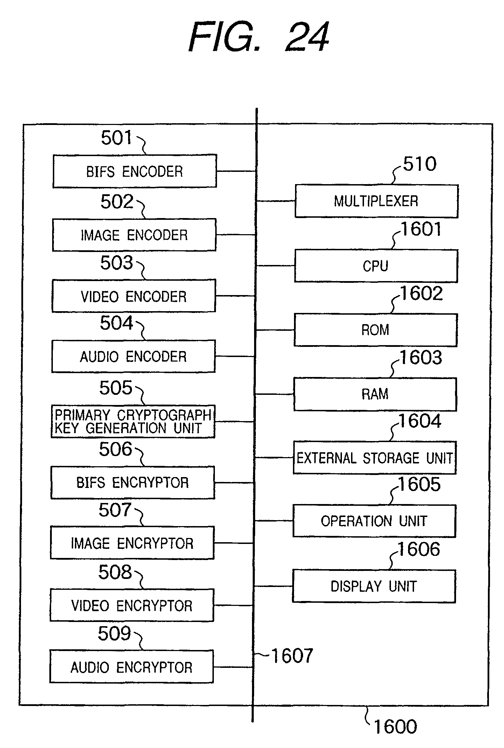

Fig. 24 is a block diagram showing the configuration of the datum transmission apparatus of a third embodiment according to the present invention.

A reference numeral 501 denotes an encoder for BIFS, and the BIFS encoder 501 encodes (or compresses) a source of BIFS input from external equipment. The BIFS encoder 501 generates data of a check sum of BIFS at that time.

A reference numeral 502 denotes an image encoder. The image encoder 502 encodes (or compresses) a source of an image input from external equipment.

A reference numeral 503 denotes an encoder for a video. The video encoder 503 encodes (or compresses) a source of video input from external equipment.

A reference numeral 504 denotes an encoder for audio. The audio encoder 504 encodes (or compresses) a source of audio input from external equipment.

A reference numeral 505 denotes a primary cryptograph key generation unit. The primary cryptograph key generation unit 505 generates a primary cryptograph key on the basis of a password input by a user with an operation unit 1605.

A reference numeral 506 denotes an encryptor for BIFS. The BIFS encryptor 506 encrypts a bit stream of BIFS output from the BIFS encoder 501 by the use of a primary cryptograph key generated by the primary cryptograph key generation unit 505, and generates secondary cryptograph keys for respective media on the basis of the primary cryptograph key and a check sum of BIFS output from the BIFS encoder 501.

Reference numerals 507, 508 and 509 denote an image encryptor, a video encryptor and an audio encryptor, respectively. The encryptors 507 to 509 encrypt the bit stream of each medium output from the respectively corresponding encoders (502 to 504) by the use of the secondary cryptograph keys for the respective media.

A reference numeral 510 denotes a multiplexer. The multiplexer 510 generates a superposed bit stream from respective bit streams output from the encoders for respective media (507 to 509). The generated bit stream is transmitted to a datum reproduction apparatus 1 that is described later.

A reference numeral 1600 denotes a transmission apparatus.

A reference numeral 1601 denotes a central processing unit (CPU). The CPU 1601 reads out a program code for controlling the whole transmission apparatus 1600 from a ROM 1602 storing the program code, and executes the read program code.

A reference numeral 1602 is the ROM described above. The ROM 1602 stores not only the aforesaid program code, but also stores graphic character codes to be used at the generation of primary cryptograph key by the use of the primary cryptograph key generation unit 505 and the operation unit 1605.

A reference numeral 1603 denotes a RAM to be used as a work area when the CPU 1601 executes the aforesaid program code.

A reference numeral 1604 denotes an external storage unit to store some passwords to be used at the generation of a primary cryptograph key.

A reference numeral 1605 denotes the aforesaid operation unit.

A reference numeral 1606 denotes a display unit composed of a cathode ray tube (CRT), a liquid crystal screen or the like. The display unit 1606 displays some passwords stored in the external storage unit 1604, system messages of the transmission apparatus 1600 and the like.

A reference numeral 1607 denotes a bus connecting the aforesaid respective units with one another.

Processing in the data transmission apparatus 1600 of the present embodiment based on the aforesaid configuration is described.

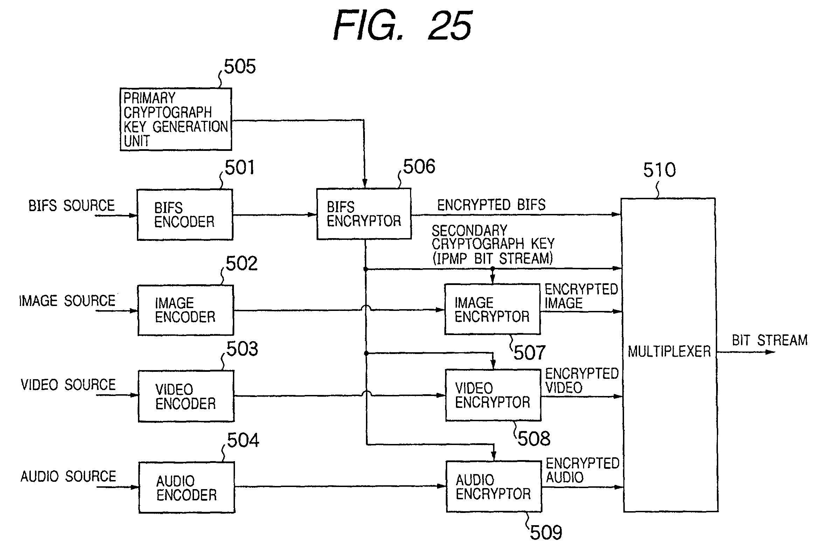

Fig. 25 is a block diagram configured for illustrating the flow of the processing of the datum transmission apparatus 1600 intelligibly. Incidentally, in Fig. 25, the denoted same components as those shown in Fig. 24 are denoted by the same reference marks as those in Fig. 24.

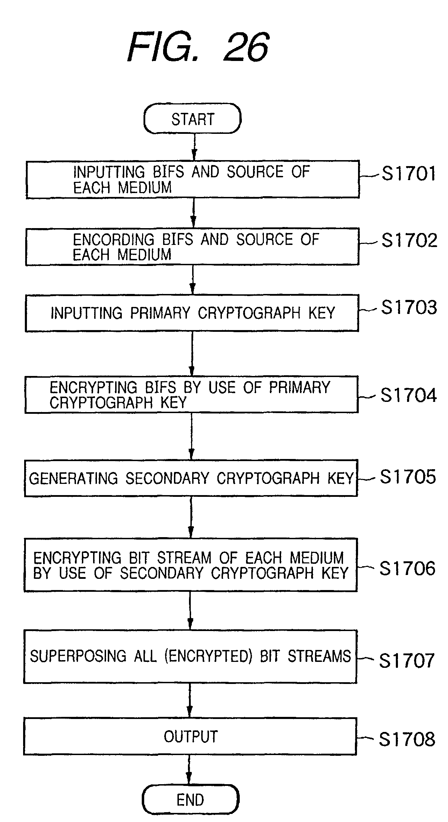

The flowchart of Fig. 26 is referred while the operation of the datum transmission apparatus 1600 is described.

At first, BIFS and sources of respective media are input respective encoders (501 to 504) from external equipment (step S1701).

BIFS and the sources of the respective media input into the aforesaid respective encoders (501 to 504) are encoded (step S1702).

A user inputs a primary cryptograph key with the primary cryptograph key generation unit 505 (step S1703).

A bit stream of BIFS encoded by the BIFS encoder 501 is encrypted by the BIFS encryptor 506 on the basis of the primary cryptograph key input by the user from the primary cryptograph key generation unit 505 (step S1704).

The encrypted bit stream of BIFS is output to the multiplexer 510. At that time, the BIFS encryptor 506 generates secondary cryptograph keys for respective media by the use of the check sum of BIFS generated by the BIFS encoder 501 and the aforesaid primary cryptograph key (step S1705).

On the other hand, the bit streams of respective media encoded by the respective encoders (502 to 504) for respective media are encrypted by respective encryptors for respective media (507 to 509) by means of the secondary cryptograph keys (step S1706).

All of the encrypted bit streams are superposed by the multiplexer 510 as described above (step S1707).

Incidentally, the information pertaining to the generation method of the secondary cryptograph keys for respective media and the encryption method of BIFS by the use of the primary cryptograph key is stored in IPMP (stream) to be output to the multiplexer 510.

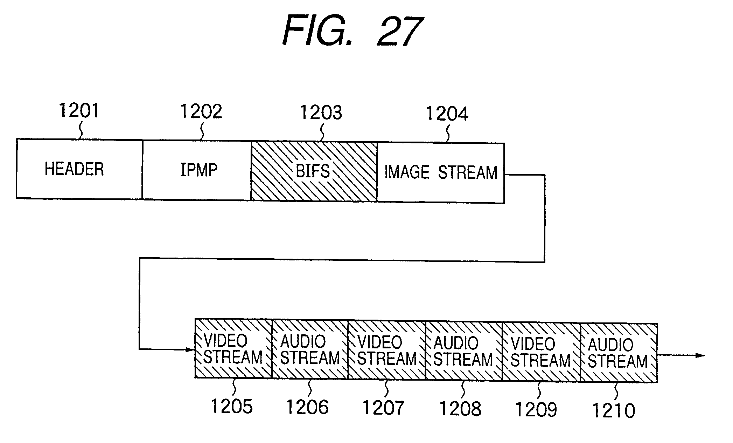

The multiplexer 510 superposes all of the input encrypted BIFS, the encrypted bit stream of each medium and IPMP to generate a bit stream having a structure shown in Fig. 27. The generated bit stream is transmitted to the datum reproduction apparatus 1, which will be described later (step S1708).

Incidentally, in Fig. 27, a reference numeral 1201 denotes a header describing the profile/level information of the bit stream, the setting information of the decoders, the attribute information of each object, and the like. A reference numeral 1202 denotes an IPMP stream. A reference numeral 1203 denotes a BIFS stream. A reference numeral 1204 denotes an image stream.

Reference numerals 1205, 1207 and 1209 denote a video stream severally. Reference numerals 1206, 1208 and 1210 denote an audio stream severally. Media, such as video and audio, which require real time reproduction and synchronization in such a way, are frequently superposed alternately.

In the present -embodiment, BIFS, the bit streams of video (1205, 1207, 1209) and the bit streams of audio (1206, 1208, 1210) are severally encrypted to be protected.

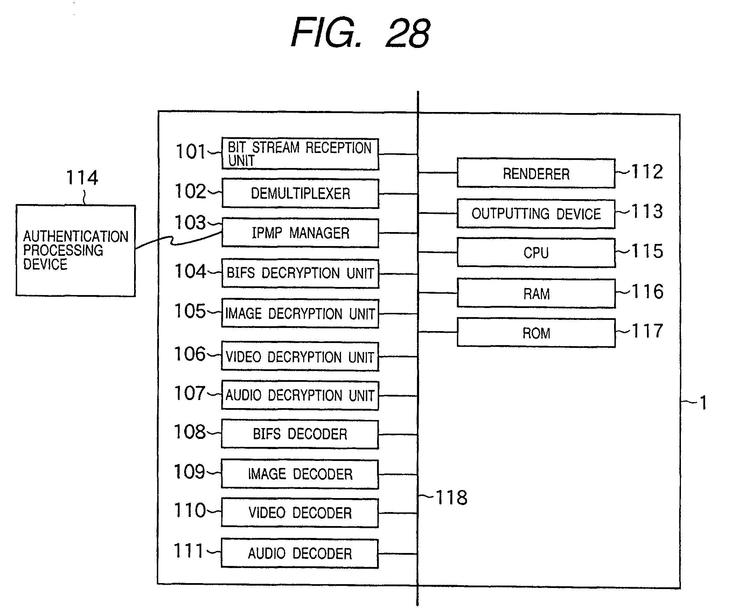

Next, an inner block diagram of the datum reproduction apparatus 1 of the third embodiment is shown in Fig. 28.

A reference numeral 1 denotes the datum reproduction apparatus.

A reference numeral 101 denotes a bit stream reception unit for receiving the aforesaid bit stream transmitted from the datum transmission apparatus 1600. Moreover, the bit stream reception unit 101 does not always receive the bit stream only through a communication line, but may be receive the bit stream from a storage medium such as floppy disk, a CD-ROM or the like, into which the bit stream generated by the datum transmission apparatus 1600 is stored.

A reference numeral 102 denotes a demultiplexer. The demultiplexer 102 extracts out the aforesaid bit streams of the respective media, BIFS and IPMP from the bit stream transmitted from the transmission apparatus 1600.

A reference numeral 103 denotes an IPMP manager. When the information indicating that a authentication processing unit 114 has authenticated a user trying to reproduce each of the aforesaid media is input into the IPMP manager 103, the IPMP manager 103 permits a BIFS decryption unit 104 to operate. Moreover, the IPMP manager 103 reads the information related to the encryption method of BIFS stored in the IPMP from the demultiplexer 102, and transmits an instruction for decryption to the BIFS decryption unit 104.

A reference numeral 104 denotes the BIFS decryption unit. The BIFS decryption unit 104 operates only when an operation permission is given by the IPMP manager 103. The contents of the operation of the BIFS decryption unit 104 are the performance of the decryption of encrypted BIFS input from the demultiplexer 102 by means of a primary cryptograph key from the authentication processing apparatus 114 on the basis of an instruction from the IPMP manager 103, and the transmission of the decrypted BIFS to a BIFS decoder 108. At the same time, the BIFS decryption unit 104 obtains a check sum of decrypted BIFS, and generates secondary cryptograph keys by the use of the obtained check sum and the primary cryptograph key from the authentication processing unit 114 in accordance with the generation method of the secondary cryptograph keys for respective media stored in IPMP from the demultiplexer 102. Then, the decryption unit 104 outputs the generated secondary cryptograph keys to decryption units for respective media (105, 106, 107), severally.

A reference numeral 105 denotes an image decryption unit. The image decryption unit 105 decrypts a bit stream of an image input from the demultiplexer 102 by the use of the aforesaid secondary cryptograph key. The image decryption unit 105 outputs the decrypted bit stream of the image to an image decoder 109.

A reference numeral 106 denotes a video decryption unit. The video decryption unit 106 decrypts bit stream data of video input from the demultiplexer 102 by the use of the aforesaid secondary cryptograph key. The video decryption unit 106 outputs the decrypted bit stream of the video to a video decoder 110.

A reference numeral 107 denotes an audio decryption unit. The decryption unit for audio **107** decrypts bit stream data of audio input from the demultiplexer 102 by the use of the aforesaid secondary cryptograph key. The audio decryption unit 107 outputs the decrypted bit stream of the audio to an audio decoder 111.

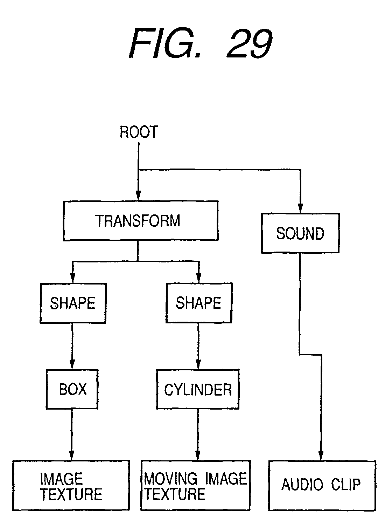

Reference numerals 108, 109, 110 and 111 denote the decoders for the aforesaid respective media. Incidentally, the BIFS decoder 108 generates the tree information of a scene shown in Fig. 29 as a result of the decoding of BIFS. The tree information is the information indicating the disposition information of each medium, the mutual dependence relationship between each of them, and the like.

A reference numeral 112 denotes a renderer. The renderer 112 is a unit for finally disposing each medium, and the texture, the video and the audio that attend each medium, on the basis of the aforesaid tree information to display and reproduce them.

A reference numeral 113 denotes an outputting device. For example, an image and video are displayed on a television (TV) monitor, and audio is reproduced from a speaker.

A reference numeral 114 denotes the aforesaid authentication processing unit. Into the authentication processing unit 114 a user trying to reproduce each of the aforesaid media can input a password as the aforesaid primary cryptograph key. Incidentally, the password is input by means of an IC card for authentication (not shown). Moreover, user information is described on the IC card for authentication, the user information may be read by the authentication processing unit 114. Incidentally, the internal structure of the authentication processing apparatus 114 is not specially limited.

A reference numeral 115 denotes a CPU for controlling the aforesaid respective units on the basis of each program code, which will be described later, stored in a ROM 117.

A reference numeral 116 denotes a RAM for being used as a work memory to be used by the CPU 115 while the CPU 115 is executing the program code. Moreover, the RAM 116 is used as a video RAM (VRAM) by the TV monitor included in the outputting device 113. Furthermore, the RAM 116 can temporarily store bit stream data input from the outside through the bit stream reception unit 101.

A reference numeral 117 denotes a ROM in which various program codes to be executed by the CPU 115 are stored.

A reference numeral 118 denotes a bus connecting each of the aforesaid units.

Processing in the datum reproduction apparatus 1 of the present embodiment based on the aforesaid configuration is described.

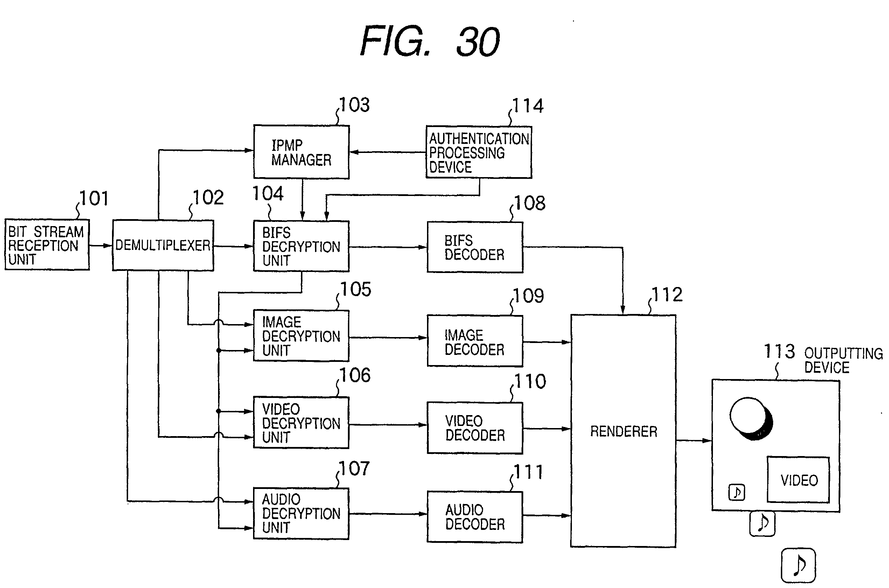

Fig. 30 is a block diagram configured for illustrating the flow of the processing of the datum reproduction apparatus 1 intelligibly. Incidentally, in Fig. 30, the same components as those shown in Fig. 28 are denoted by the same reference marks as those in Fig. 28.

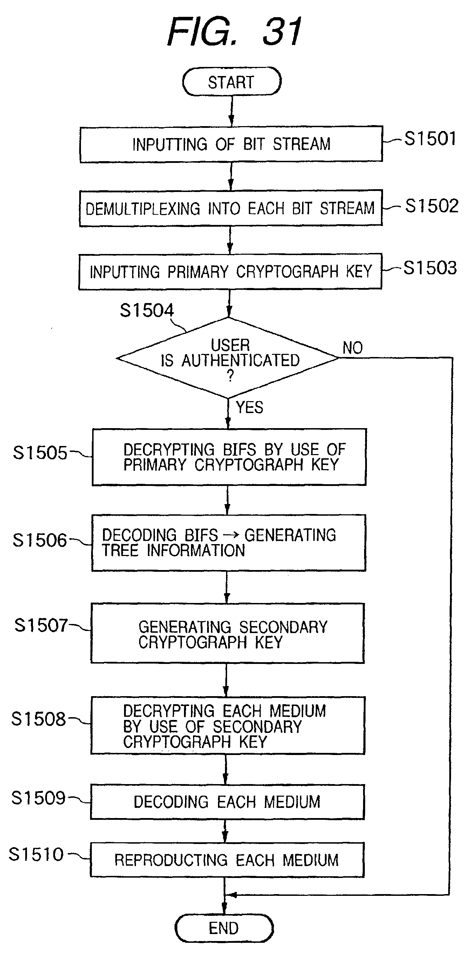

The flowchart of Fig. 31 is referred while the operation of the datum reproduction apparatus 1 is described.

A bit stream received from the datum transmission apparatus 1600 is input into the datum reproduction apparatus 1 through the bit stream reception unit 101 (step S1501).

Each bit stream (of each medium, BIFS and IPMP) is extracted from the input bit stream by the demultiplexer 102 (step S1502).

The extracted IPMP is output to the IPMP manager 103. The extracted BIFS is output to the BIFS decryption unit 104. The extracted image bit stream is output to the image decryption unit 105. The extracted video bit stream is output to the video decryption unit 106. The extracted audio bit stream is output to the audio decryption unit 107, respectively (step S1503).

On the other hand, if a user trying to reproduce each of the aforesaid media is authenticated in the authentication processing of the user (step S1504), the BIFS decryption unit 104 having obtained the permission of operation from the IPMP manager 103 in the way described above decrypts BIFS to transmit the decrypted BIFS stream to the BIFS decoder 108 in the way described above (step S1505).

The decrypted BIFS stream is decoded by the BIFS decoder 108 to generates the tree information of a scene shown in Fig. 29 (step S1506).

Moreover, at the same time, the BIFS decryption unit 104 transmits the secondary cryptograph keys for respective media generated by the processing described above to the decryption units for respective media (105 to 107) (step S1507).

Decryption of respective media is performed in the decryption units for respective media (105 to 107), and the bit streams of respective media are transmitted to the decoders for respective media (109 to 111) (step S1508).

The bit streams of respective media transmitted to the decoders for respective media are decoded (step S1509). The respective decoded media, and the textures, the video and the audio that attend respective media are disposed finally by the renderer 112 on the basis of the aforesaid tree information. Then, the outputting device 113 displays images and the video on the TV monitor, and reproduces the audio by the speaker (step S1510).

Incidentally, the aforesaid embodiment uses a primary cryptograph key and a check sum of BIFS for generating secondary cryptograph keys, but the primary cryptograph key and the number of objects in a scene may be used for the generation of the secondary cryptograph keys.

The usage of the transmission apparatus having the configuration described above, the authentication unit and the control method of them makes it possible to protect the security of individual media included in a scene.

### EMBODIMENT 4

In the present embodiment, a datum reproduction apparatus is shown and described. The datum reproduction apparatus divides the bit stream of an input scene into a bit stream of a protected scene and a bit stream of an unprotected scene when the bit stream of the scene composed of the protected scene and the not protected scene (hereinafter referred to as a "mixed scene") is input.

Incidentally, the same datum transmission apparatus as one used in the third embodiment is used as a datum transmission apparatus transmitting a bit stream to the datum reproduction apparatus of the present embodiment.

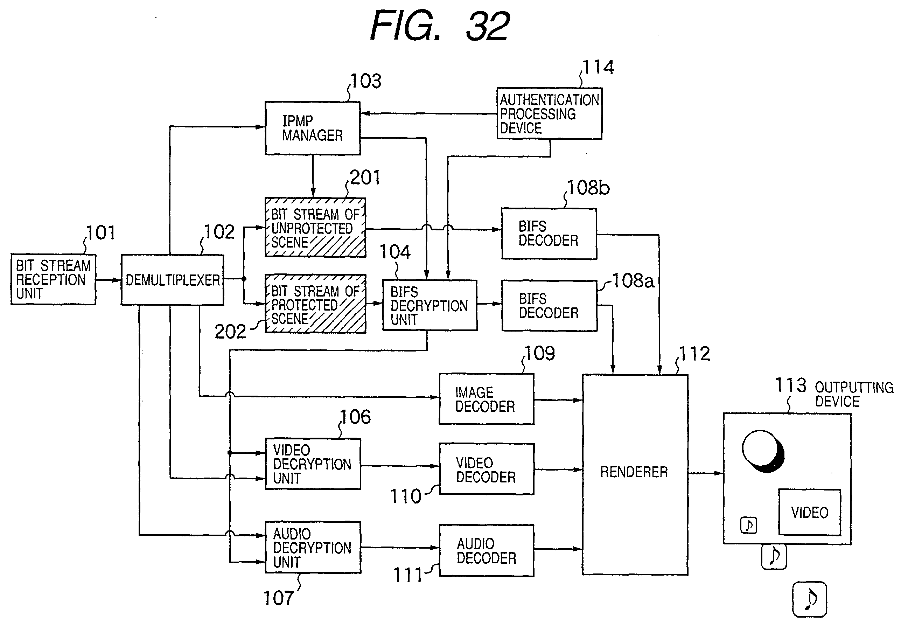

Fig. 32 shows the internal block diagram of the datum reproduction apparatus of the present embodiment. Incidentally, in Fig. 32, the same components as those shown in Fig. 30 are denoted by the same reference numerals and their descriptions are omitted.

A reference numeral 201 denotes the bit stream of an unprotected scene. The bit stream 201 is a bit stream resulted in from the division of the bit stream of a mixed scene input from the datum transmission apparatus 1600 through the bit stream reception unit 101 by the demultiplexer 102.

A reference numeral 202 denotes the bit stream of a protected scene. The bit stream 202 is a bit stream resulted in from the division of the bit stream of a mixed scene input from the datum transmission apparatus 1600 through the bit stream reception unit 101 by the demultiplexer 102.

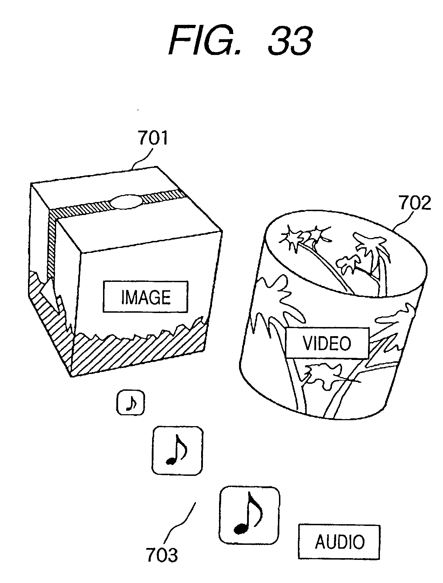

Incidentally, the scene in the present embodiment is supposed to be one shown in Fig. 33. That is, an image texture is pasted on a box 701. A video texture is pasted on a cylinder 702. Audio is also reproduced in the scene at the same time.

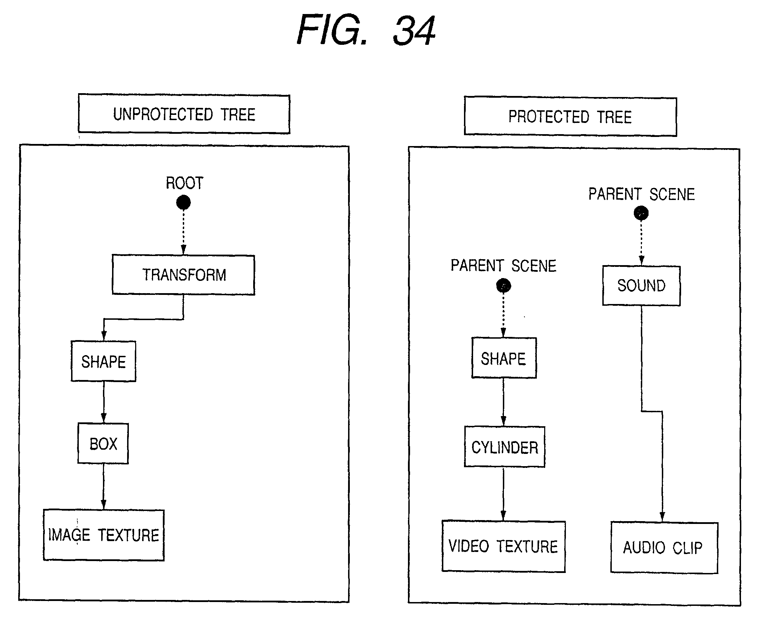

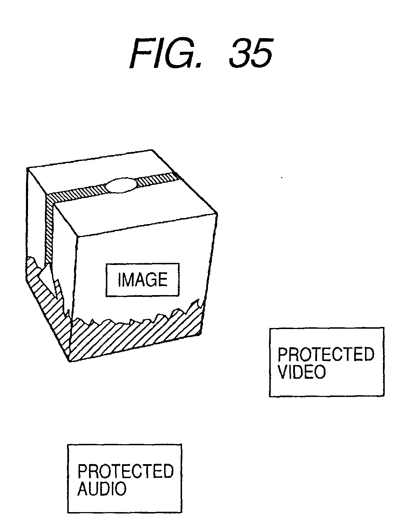

Moreover, Fig. 34 shows that the box and the image texture pasted on the box are not protected and only the cylinder, the video texture and the audio are protected in the mixed scene of the present embodiment. If the mixed scene is output to the outputting device 113 when the protected data cannot be reproduced, a result shown in Fig. 35 is obtained.

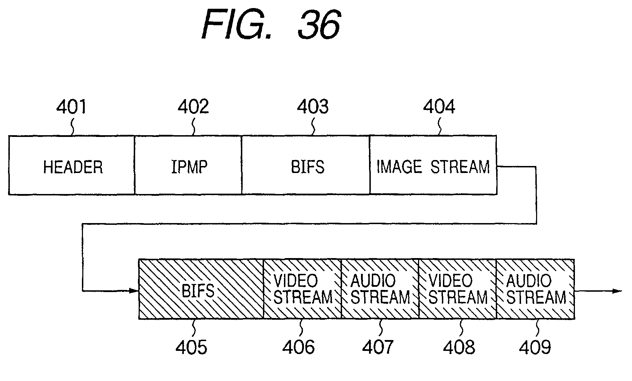

Fig. 36 shows the structure of the bit stream of the mixed scene in which the protected scene and the not protected scene are superposed on each other.

Hatched blocks indicate the protected bit streams. For example, a reference numeral 403 denotes the unit of the bit stream of unprotected BIFS. A reference numeral 405 denotes the unit of the bit stream of protected BIFS. Thus, it is understood that the bit stream of BIFS is divided.

Then, the bit stream 201 of the unprotected scene is encoded by the BIFS decoder 108b as it is, to generate the tree information of the scene shown in Fig. 34. On the other hand, the bit stream 203 of the protected scene is decrypted by the BIFS decryption unit 104. After that, as described in the third embodiment, the BIFS decryption unit 104 generates the secondary cryptograph keys for respective media to output them to the video decryption unit 106 and the decryption unit for audio 107. Successively, the same processing as that in the third embodiment is performed.

The usage of the authentication unit having the configuration described above and the control method thereof makes it possible to protect the security of individual media included in a mixed scene composed of a protected scene and an unprotected scene.

### OTHER EMBODIMENTS

Incidentally, the aforesaid first to the fourth embodiments may be applied to a system composed of a plurality of equipment (e.g. a host computer, interface equipment, a reader, a printer and the like), or to a system composed of only one equipment (e.g. a copying machine, a facsimile machine or the like).

Moreover, needless to say, the objects of the aforesaid embodiments can be achieved by providing a storage medium (or a recording medium) storing a recorded program code to realize the functions of the aforesaid embodiments to a system or an apparatus so that the computer (or a CPU or a microprocessor unit (MPU)) of the system or the apparatus reads the program code stored in the storage medium to execute it. In this case, the program code, read out from the storage medium, itself realizes the aforesaid functions of the embodiments, and then the storage medium storing the program code constitutes the aforesaid embodiments. Moreover, needless to say, the scope of the present invention includes not only the case where the aforesaid functions of the embodiments are realized by the execution of the read program code of the computer, but also the case where the functions of the aforesaid embodiments are realized by the processing of an operating system (OS) or the like, which is operating on the computer and executing a part or the whole of the actual processing in accordance with the instructions of the program code.

Moreover, needless to say, the scope of the present invention includes the case where, after the program code read from the storage medium is written in a memory equipped in a feature expansion card inserted into the computer or a feature expansion unit connected with the computer, a CPU or the like equipped in the feature expansion card or the feature expansion unit executes a part or the whole of the actual processing in accordance with the instruction of the program code and the functions of the aforesaid embodiments are realized by the processing.

## Claims

1. A data processing method of reproducing a plurality of object streams having predetermined information severally, said method comprising:
a management information extraction step of extracting hierarchical management information for controlling permission and inhibition of usage of each object from input data;
an upper level judgment step of judging whether usage of an upper level object of a subjected object is prohibited or not in accordance with said management information extracted in said management information extraction step; and
a control step of prohibiting usage of the subjected object if the usage of the upper level object of the subjected object is prohibited in accordance with a judgment result in said upper level judgment step.

2. A data processing method according to claim 1, wherein said object streams are bit streams conforming to MPEG-4.

3. A data processing method according to claim 2, wherein said management information is information included in an Intellectual Property Management And Protection (IPMP) stream.

4. A data processing method according to claim 1, wherein said management information is encrypted information.

5. A data processing method according to claim 2 or 3, wherein said management information is encrypted information.

6. A data processing method according to claim 4, wherein said management information of a predetermined hierarchical level is encrypted information.

7. A data processing method according to claim 1, wherein said management information is managed in relation to each of said object streams.

8. A data processing method according to claim 1, wherein said management information is hierarchized with information of a pointer to other management information.

9. A data processing method according to claim 1, wherein said management information is hierarchized with other management information included therein.

10. A data processing method according to claim 4, wherein said management information is managed in relation to each of said object streams.

11. A data processing method according to claim 4, wherein said management information is hierarchized with information of a pointer to other management information.

12. A data processing method according to claim 4, wherein said management information is hierarchized with other management information included therein.

13. A data processing method according to claim 3, wherein said management information is management information of a scene description information (or Binary Format For Scene (BIFS)) stream.

14. A data processing method according to claim 13, wherein said method updates a usage control method of said object streams every time when a scene is updated by the scene description information stream.

15. A data processing apparatus for reproducing a plurality of object streams having predetermined information severally, said apparatus comprising:
management information extraction means for extracting hierarchical management information for controlling permission and inhibition of usage of each object from input data;
upper level judgment means for judging whether usage of an upper level object of a subjected object is prohibited or not in accordance with said management information extracted by said management information extraction means; and
control means for prohibiting usage of the subjected object if the usage of the upper level object of the subjected object is prohibited in accordance with a judgment result by said upper level judgment means.

16. A data processing apparatus according to claim 15, wherein said object streams are bit streams conforming to MPEG-4.

17. A data processing apparatus according to claim 16, wherein said management information is information included in an Intellectual Property Management And Protection (IPMP) stream.

18. A data processing apparatus according to claim 15, wherein said management information is encrypted information.

19. A data processing apparatus according to claim 16 or 17, wherein said management information is encrypted information.

20. A data processing apparatus according to claim 18, wherein said management information of a predetermined hierarchical level is encrypted information.

21. A data processing apparatus according to claim 15, wherein said management information is managed in relation to each of said object streams.

22. A data processing apparatus according to claim 15, wherein said management information is hierarchized with information of a pointer to other management information.

23. A data processing apparatus according to claim 15, wherein said management information is hierarchized with other management information included therein.

24. A data processing apparatus according to claim 18, wherein said management information is managed in relation to each of said object streams.

25. A data processing apparatus according to claim 18, wherein said management information is hierarchized with information of a pointer to other management information.

26. A data processing apparatus according to claim 18, wherein said management information is hierarchized with other management information included therein.

27. A data processing apparatus according to claim 17, wherein said management information is management information of a scene description information (or BIFS) stream.

28. A data processing apparatus according to claim 27, wherein said apparatus updates a usage control method of said object streams every time when a scene is updated by the scene description information stream.

29. A storage medium for storing program software for executing a data processing method according to any one of claims 1 to 4 and 6 to 14.

30. A data processing apparatus comprising:
first encryption means for encrypting scene description information by means of a primary cryptograph key;
generation means for generating a secondary cryptograph key by making use of the primary cryptograph key;
second encryption means for encrypting a medium stream by making use of the secondary cryptograph key;
superposition means for superposing a bit stream indicating an encryption method of said first encryption means on bit streams resulted in by encryption of said first and said second encryption means to generate a bit stream; and
transmission means for transmitting the bit stream generated by said superposition means to external equipment.

31. A data processing apparatus according to claim 30, wherein said generation means further generates the secondary cryptograph key by making use of the scene description information.

32. A data processing apparatus according to claim 30, wherein the bit stream is a bit stream conforming to MPEG-4.

33. A data processing apparatus according to claim 32, wherein the scene description information is Binary Format For Scene (BIFS) information conforming to MPEG-4.

34. A data processing apparatus comprising:
reception means for receiving a bit stream transmitted from external equipment;
detection means for detecting a primary cryptograph key;
first decryption means for decrypting encrypted scene description information included in the received bit stream on a basis of a decryption method included in the received bit stream by making use of the primary cryptograph key detected by said detection means;
generation means for generating a secondary cryptograph key by making use of the primary cryptograph key;
second decryption means for decrypting an encrypted medium stream included in the bit stream by making use of the secondary cryptograph key; and
reproduction means for reproducing the medium stream decrypted by said second decryption means, on a basis of the scene description information decrypted by said first decryption means.

35. A data processing apparatus according to claim 34, wherein said detection means detects the primary cryptograph key from a storage medium storing the primary cryptograph key.

36. A data processing apparatus according to claim 34 or 35, wherein said generation means further generates the secondary cryptograph key by making use of the scene description information.

37. A data processing apparatus according to claim 34, wherein the bit stream is a bit stream conforming to MPEG-4.

38. A data processing apparatus according to claim 37, wherein the scene description information is Binary Format For Scene (BIFS) information conforming to MPEG-4.

39. A data processing system comprising a datum transmission apparatus and a datum reception apparatus, said datum transmission apparatus comprising:
first encryption means for encrypting scene description information by means of a primary cryptograph key;
generation means for generating a secondary cryptograph key by making use of the primary cryptograph key;
second encryption means for encrypting a medium stream by making use of the secondary cryptograph key;
superposition means for superposing a bit stream indicating an encryption method of said first encryption means on bit streams resulted in by encryption of said first and said second encryption means to generate a bit stream; and
transmission means for transmitting the bit stream generated by said superposition means to an authentication apparatus,
said datum reproduction apparatus comprising:
reception means for receiving the bit stream transmitted from said transmission apparatus; and
detection means for detecting the primary cryptograph key;
first decryption means for decrypting the encrypted scene description information included in the received bit stream on a basis of the decryption method included in the received bit stream by making use of the primary cryptograph key detected by said detection means;
generation means for generating the secondary cryptograph key by making use of the primary cryptograph key;
second decryption means for decrypting the encrypted medium stream included in the bit stream by making use of the secondary cryptograph key; and
reproduction means for reproducing the medium stream decrypted by said second decryption means, on a basis of the scene description information decrypted by said first decryption means.

40. A data processing method comprising:
a first encryption step of encrypting scene description information by means of a primary cryptograph key;
a generation step of generating a secondary cryptograph key by making use of the primary cryptograph key;
a second encryption step of encrypting a medium stream by making use of the secondary cryptograph key;
a superposition step of superposing a bit stream indicating an encryption method in said first encryption step on bit streams resulted in by encryption in said first and said second encryption steps to generate a bit stream; and
a transmission step for transmitting the bit stream generated in said superposition step to external equipment.

41. A data processing method according to claim 40, wherein said generation step generates the secondary cryptograph key by making use of the scene description information.

42. A data processing method according to claim 39, wherein the bit stream is a bit stream conforming to MPEG-4.

43. A data processing method according to claim 42, wherein the scene description information is Binary Format For Scene (BIFS) information conforming to MPEG-4.

44. A data processing method comprising:
a reception step of receiving a bit stream transmitted from external equipment;
a detection step of detecting a primary cryptograph key;
a first decryption step of decrypting encrypted scene description information included in the received bit stream on a basis of a decryption method included in the received bit stream by making use of the primary cryptograph key detected in said detection step;
a generation step of generating a secondary cryptograph key by making use of the primary cryptograph key;
a second decryption step of decrypting an encrypted medium stream included in the bit stream by making use of the secondary cryptograph key; and
a reproduction step of reproducing the medium stream decrypted in said second decryption step, on a basis of the scene description information decrypted in said first decryption step.

45. A data processing method according to claim 44, wherein said detection step detects the primary cryptograph key from a storage medium storing the primary cryptograph key.

46. A data processing method according to claim 44, wherein said generation step generates the secondary cryptograph key by making use of the scene description information.

47. A data processing method according to claim 45, wherein said generation step generates the secondary cryptograph key by making use of the scene description information.

48. A data processing method according to claim 44, wherein the bit stream is a bit stream conforming to MPEG-4.

49. A data processing method according to claim 48, wherein the scene description information is Binary Format For Scene (BIFS) information conforming to MPEG-4.

50. A data processing method of a data processing system comprising of a datum transmission apparatus and a datum reception apparatus, a data processing method of said datum transmission apparatus comprising:
a first encryption step of encrypting scene description information by means of a primary cryptograph key;
a generation step of generating a secondary cryptograph key by making use of the primary cryptograph key;
a second encryption step of encrypting a medium stream by making use of the secondary cryptograph key;
a superposition step of superposing a bit stream indicating an encryption method in said first encryption step on bit streams resulted in by encryption in said first and said second encryption steps to generate a bit stream; and
a transmission step of transmitting the bit stream generated in said superposition step to an authentication apparatus, and
a method of processing data of said datum reproduction apparatus comprising:
a reception step of receiving the bit stream transmitted from said transmission apparatus;
a detection step of detecting the primary cryptograph key;
a first decryption step of decrypting the encrypted scene description information included in the received bit stream on a basis of the decryption method included in the received bit stream by making use of the primary cryptograph key detected in said detection step;
a generation step of generating the secondary cryptograph key by making use of the primary cryptograph key;
a second decryption step of decrypting the encrypted medium stream included in the bit stream by making use of the secondary cryptograph key; and
a reproduction step of reproducing the medium stream decrypted in said second decryption step, on a basis of the scene description information decrypted in said first decryption step.

51. A storage medium for storing program software for executing said data processing method according to any one of claims 40 to 50.
